(19) Europäisches Patentamt / European Patent Office / Office européen des brevets

(11) **EP 4 465 204 A1**

(12) **DEMANDE DE BREVET EUROPEEN**

(43) Date de publication:
**20.11.2024 Bulletin 2024/47**

(21) Numéro de dépôt: **24169370.4**

(22) Date de dépôt: **10.04.2024**

(51) Classification Internationale des Brevets (IPC):
**G06K 19/02** *(2006.01)* **G06K 19/077** *(2006.01)*

(52) Classification Coopérative des Brevets (CPC):
**G06K 19/07769; G06K 19/02; G06K 19/07794; H01Q 7/00;** H01Q 1/2208

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **15.05.2023 FR 2304806**

(71) Demandeur: **Idemia**
**92400 Courbevoie (FR)**

(72) Inventeur: **ALI, Ahmed**
**92400 Courbevoie (FR)**

(74) Mandataire: **Idemia**
**2, place Samuel de Champlain**
**92400 Courbevoie (FR)**

(54) **CARTE À PUCE AVEC ANTENNES RADIOFRÉQUENCES**

(57) L'invention vise une carte à puce (CD1, CD2) comprenant un corps de carte (6) comprenant une couche métallique (8) au moins partiellement recouverte par un revêtement (70) plus conducteur que la couche métallique, une puce RF (4), une première antenne RF (ANT1) disposée dans une zone d'évidement (14) et connectée à la puce. La couche métallique comporte au moins une partie d'antenne RF (ANT2, ANT2) isolée électriquement de la couche métallique et de la première antenne RF et configurée pour collecter un courant image (I2a) induit par des premiers courants de Foucault (I1a) circulant au moins sur le revêtement (70) de la couche métallique et permettre un couplage avec la première antenne.

Fig. 20

**Description**

Domaine Technique

L'invention se rapporte au domaine des cartes à puce et porte plus particulièrement sur les cartes à puce métalliques aptes à fonctionner en mode sans contact.

Technique antérieure

L'utilisation des cartes à puce (ou cartes à microcircuit) est aujourd'hui largement répandue dans la vie quotidienne. De telles cartes sont par exemple utilisées comme cartes bancaires, cartes de fidélité, cartes d'accès etc., et peuvent prendre divers formats selon leurs utilisations respectives. Les cartes à puce peuvent être conçues pour réaliser divers types de fonctions, notamment pour effectuer des transactions, telles que des transactions bancaires (transaction de paiement, de transfert...), des transactions d'authentification, etc.

De façon connue, une carte à puce comprend généralement un corps de carte qui est équipé d'une puce électronique configurée pour échanger des signaux avec l'extérieur et réaliser diverses fonctions selon l'utilisation souhaitée de la carte. Pour ce faire, les cartes à puce sont munies de moyens de communication permettant d'interagir avec l'extérieur, typiquement avec un lecteur NFC ou lecteur externe.

Traditionnellement, une carte à puce est conçue pour coopérer avec un lecteur NFC externe au moyen de contacts externes accessibles à la surface de la carte. Un lecteur NFC externe peut ainsi positionner des broches de contact appropriées sur les contacts externes de la carte afin d'établir une communication par contact.

Plus récemment, les cartes à puce sans contact ont connu un essor croissant en raison du gain en rapidité et en simplicité liées aux transactions sans contact. Pour ce faire, les cartes sans contact embarquent une antenne radiofréquence (RF) permettant l'échange de signaux RF avec un lecteur NFC externe (par exemple en champ proche NFC pour « Near Field Communication » en anglais). Cette antenne RF est généralement composée d'une pluralité de spires conductrices qui s'étendent dans le corps de la carte.

La structure et l'apparence des cartes à puce peuvent varier selon le cas. Les cartes à puce métalliques connaissent en particulier un intérêt croissant en raison notamment de l'aspect esthétique attractif de ces cartes (reflets métalliques, effet brossé en surface etc.), de l'impression de qualité qu'elles peuvent procurer (poids appréciable du métal, esthétique haute gamme), ou encore de la connotation de prestige qui y est associée pour leurs utilisateurs. En raison notamment de leur poids important et de l'impression de haute qualité qu'elles dégagent, ces cartes sont privilégiées par certains utilisateurs pour servir de marqueur social et d'élément différenciant. Ce type de cartes métalliques est décrit dans les documents US2021049431 et WO2023002331.

Il a cependant été observé que la présence de métal dans le corps d'une carte à puce pose des difficultés majeures lorsque la carte embarque une antenne RF pour fonctionner en mode sans contact. Le métal agit comme blindage électromagnétique et bloque ou gêne les signaux RF échangés par l'antenne RF avec l'extérieur. Le métal présent dans le corps de carte peut ainsi perturber les communications sans contact d'une carte à puce avec un lecteur NFC externe et gêner par exemple la réalisation d'une transaction sans contact (de paiement ou autre).

Il existe donc un besoin pour des cartes à puce métalliques performantes (de type RFID par exemple) et de fabrication simple, capables de coopérer efficacement en sans contact avec un lecteur NFC externe, et ce quelle que soit la position de la carte par rapport à un lecteur NFC externe, dans des conditions opérationnelles déterminées.

Exposé de l'invention

A cet effet, la présente invention concerne une carte à puce comprenant :

- un corps de carte formé au moins en partie par une couche métallique comprenant une zone d'évidement, - une puce RF ;
- une première antenne RF disposée dans ou en regard de la zone d'évidement et connectée électriquement à la puce RF ;
- au moins une partie d'antenne RF isolée électriquement de la couche métallique et de la première antenne RF et ladite au moins une partie d'antenne étant une deuxième antenne RF comprenant:

  (i) une première partie d'antenne s'étendant en regard d'une partie de la couche métallique; et
  (ii) une deuxième partie d'antenne, connectée électriquement à la première partie d'antenne, et s'étendant en regard de la zone d'évidement pour permettre un couplage magnétique avec la première antenne,

caractérisé en ce que la couche métallique est au moins partiellement recouverte par un revêtement plus conducteur que la couche métallique et en ce que

ladite première partie d'antenne s'étend en regard d'une partie de la couche métallique recouverte par ledit revêtement pour collecter ledit courant image induit par des premiers courants de Foucault circulant au moins sur le revêtement de la couche métallique et permettre un couplage de la deuxième partie d'antenne avec la première antenne RF.

Ladite au moins une partie d'antenne RF est ainsi agencée pour collecter un courant image induit par des premiers courants de Foucault et circulant sur le revêtement de la couche métallique.

L'homme du métier comprendra que le revêtement conducteur n'étant jamais parfait, ladite au moins une partie d'antenne collecte également le courant image induit par des courants de Foucault circulant dans l'épaisseur de ce revêtement, voire dans la couche métallique elle-même si l'épaisseur du revêtement est inférieure à son effet de peau.

Dans un mode de réalisation, l'épaisseur du revêtement est supérieure à l'épaisseur de peau, à la fréquence d'usage, dudit revêtement.

L'épaisseur de peau '$\delta$' est donné approximativement par la formule :

$$\delta \cong \frac{1}{\sqrt{\pi f \mu \sigma}}$$

'$f$' étant la fréquence du signal en HZ, '$\mu$' la perméabilité dudit revêtement, '$\sigma$' la conductivité électrique du revêtement en S/m et $\delta$ est en mètres.

Dans un mode de réalisation, la couche métallique est entièrement recouverte dudit revêtement.

Ce mode de réalisation est le plus simple à mettre en oeuvre, mais l'homme du métier comprendra qu'il n'est pas absolument nécessaire, le revêtement conducteur devant au moins être présent dans les zones de la carte correspondant aux zones de circulation des courants de Foucault dominants.

Par conséquent, ladite au moins une partie d'antenne peu également collecter un courant image induit par des courants de Foucault circulant sur des parties de la couche métallique non recouvertes par le revêtement.

Dans un mode de réalisation, la conductivité dudit revêtement est supérieure à $3,5 \times 10^7$ S/m. Dans un mode de réalisation, le revêtement est en cuivre, en argent ou en or.

Dans un mode de réalisation, les courants de Foucault sont produits sous l'effet d'un champ magnétique auquel est soumise la carte à puce.

Dans un mode de réalisation, ladite au moins une partie d'antenne antenne RF est isolée électriquement de la couche métallique et de la première antenne RF par une couche isolante intercalée entre ladite au moins une partie d'antenne antenne RF d'une part, et la couche métallique et la zone d'évidement d'autre part.

Selon un mode de réalisation, la carte à puce comprend en outre un module électronique comportant la puce RF, ledit module électronique étant ménagé dans ou en regard de la zone d'évidement.

Selon un mode de réalisation, le couplage magnétique permet à la puce RF d'établir une communication sans contact avec l'extérieur de la carte à puce en utilisant ladite au moins une partie d'antenne RF couplée à la première antenne RF.

Selon un mode de réalisation, les première et deuxièmes parties d'antenne de la deuxième antenne RF sont connectées en parallèle avec un composant capacitif.

Selon un mode de réalisation, la première antenne RF est disposée en regard de la zone d'évidement de sorte que la zone d'évidement est intercalée entre les première et deuxième antennes RF pour permettre ledit couplage magnétique entre lesdites première et deuxième antennes.

Dans une première variante de réalisation, la zone d'évidement débouche sur un bord périphérique de la couche métallique.

Cette première variante de réalisation de l'invention offre ainsi une carte à puce métallique performante (de type RFID par exemple) et de fabrication simple, capable de coopérer efficacement en sans contact avec un terminal externe, et ce quelle que soit l'orientation de la carte vis-à-vis du terminal externe.

Lorsque la carte à puce est soumise à un champ magnétique, l'action combinée du courant image acheminé depuis la première partie d'antenne d'une part, et d'un courant induit dans la deuxième partie d'antenne par le champ magnétique au niveau de la zone d'évidement d'autre part, permet de maximiser la quantité d'énergie collectée dans la deuxième antenne RF à partir du champ magnétique, et donc de garantir un couplage magnétique performant entre les deux antennes RF, ce qui permet de délivrer un maximum d'énergie à la puce RF reliée à la première antenne RF.

En fonctionnement, sous l'effet du champ magnétique auquel est soumise la carte à puce, la puce RF est ainsi capable d'utiliser la deuxième antenne RF couplée avec la première antenne RF pour communiquer avec un terminal externe (en particulier pour échanger des signaux RF en transmission et/ou réception avec le terminal). Lorsqu'un utilisateur présente la carte à puce au voisinage du terminal, une communication sans contact peut ainsi être établie entre le terminal et la carte à puce, et ce quelle que soit l'orientation de cette dernière vis-à-vis du terminal. En effet, des courants de Foucault sont générés sur le revêtement de la couche métallique quelle que soit l'orientation de la carte à puce relativement au terminal. De même, quelle que soit la face de la carte à puce qui est présentée devant le terminal, la deuxième partie d'antenne de la deuxième antenne est capable de collecter une composante de courant induite par le champ magnétique au niveau de la zone d'évidement.

Dans un mode de réalisation, la deuxième antenne RF est configurée de sorte que la première partie d'antenne s'étend en regard d'une zone périphérique de la couche métallique recouverte par le revêtement.

Dans un mode de réalisation, la couche métallique comprend une fente connectant la zone d'évidement au bord périphérique de la couche métallique (correspond à la rev 4 du premier dossier).

Selon un mode de réalisation, la zone d'évidement s'étend jusqu'au bord périphérique de la couche métallique.

Selon un mode de réalisation, la deuxième antenne RF est configurée de sorte que la deuxième partie d'antenne s'étend exclusivement en regard de la zone d'évidement.

Les inventeurs ont détecté que les cartes à puces métalliques de l'art antérieur rencontraient un problème en particulier lorsque la carte est déplacée dans le plan hors du centre du lecteur NFC. Ceci est très courant dans l'environnement RFID HF NFC, par exemple lors d'un paiement lorsque l'utilisateur approche sa carte de manière décentrée par rapport au lecteur du point de vente.

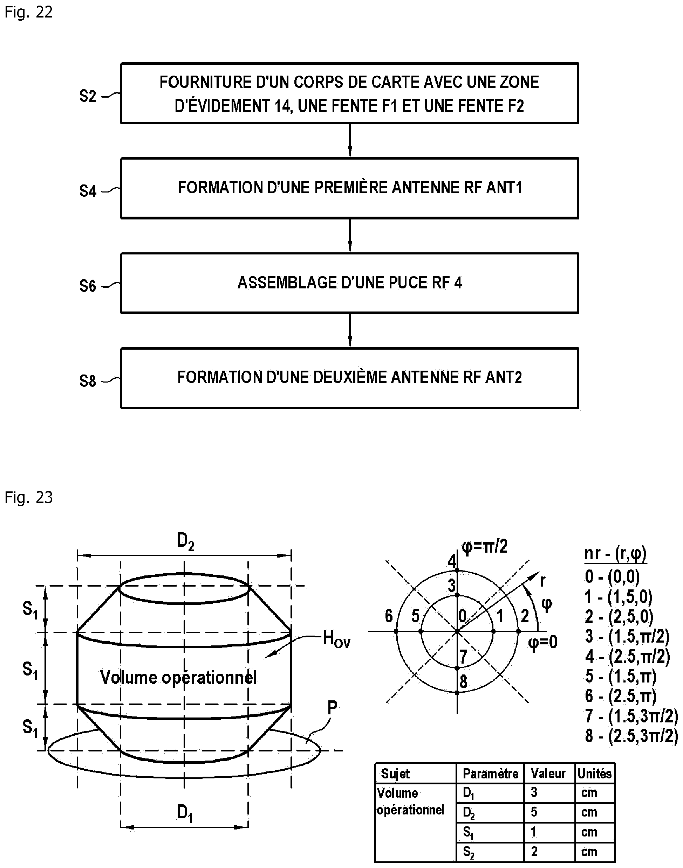

La figure 23 illustre par exemple un volume opérationnel dans l'ensemble duquel la carte doit être opérationnelle pour être conforme à une norme définie par un organisme international EMVCO. L'homme du métier peut se reporter au document « EMV Contactless Spécifications for Payment Systems, Book D: EMV Contactless C ommunication Protocol Spécification. Version 2.6, March 2016. ». L'un des objectifs d'EMVCo est de garantir l'interopérabilité et la compatibilité des cartes à puce et des lecteurs de ces cartes dans des conditions opérationnelles déterminées.

Ce volume opérationnel est défini par des dimensions S1, S2, D1, D2 rappelées sur la figure 23.

Cette figure représente également la projection de 9 points de de volume sur un plan. Par exemple, le point 6 illustre une situation dans laquelle le centre de la carte est décalé de 25 mm par rapport au centre du lecteur NFC.

Dans l'état actuel de la technique, les cartes à puce métallique ne fonctionnent pas de manière satisfaisante dans l'ensemble du volume opérationnel EMVCo, notamment pour les positions de la carte correspondant au point 6.

Pour améliorer encore le fonctionnement de la carte à puce selon l'invention, dans une deuxième variante de réalisation de l'invention, ladite couche métallique est constituée par une première région et une deuxième région entièrement délimitées par une droite parallèle à un petit côté de la carte, la première région contenant entièrement la zone d'évidement et sa surface étant plus petite que celle de la deuxième région ,

- une première fente connectant la zone d'évidement à un bord périphérique de la première région ;
- une deuxième fente débouchant soit sur un bord périphérique de la couche métallique soit dans la zone d'évidement, la deuxième fente se terminant par une partie fermée dans la deuxième région; et
- ladite au moins une partie d'antenne est une deuxième antenne comportant au moins une spire en regard de la première fente et au moins une spire en regard de la deuxième fente.

L'invention offre ainsi une carte à puce métallique performantes (de type RFID par exemple) et de fabrication simple, capable de coopérer efficacement en sans contact avec un lecteur NFC externe, et ce quelle que soit la position et l'orientation de la carte vis-à-vis du lecteur NFC externe.

De façon très avantageuse, la couche métallique comporte donc au moins deux fentes, une première fente étant située dans la première région, la deuxième fente étant située dans la deuxième région.

Préférentiellement, la première fente débouche sur un petit côté de la carte à puce, au plus près de la zone d'évidement.

Préférentiellement, la deuxième fente métallique débouche dans la cavité et se termine dans une zone de la carte située entre la cavité et le centre de la carte à puce.

Chacune de ces fentes permet au champ magnétique généré par un lecteur de la carte de passer à travers la couche métallique, ce qui génère un courant induit dans les spires de la deuxième antenne situées en regard de ces fentes.

Cette configuration permet également à chacune des spires de la deuxième antenne mentionnées précédemment de collecter un courant image induit par un courant circulant sur la couche métallique localement au niveau des fentes en raison du flux magnétique généré par le lecteur de la carte à puce.

Lorsque la couche métallique n'est pas entièrement recouverte de revêtement, celui-ci doit au moins être présent dans les zones de circulation des courants dominants, et notamment le long des bords périphériques de la carte et le long des deux fentes.

Comme détaillé ci-après, du fait de la continuité des courants de Foucault, les deux courants collectés par ces spires d'antenne, à savoir celui induit directement par le champ électromagnétique traversant une fente et celui image d'un courant de Foucault local circulant sur la couche métallique se cumulent.

Cette configuration permet un couplage efficace entre les deux antennes, quelle que soient les conditions opérationnelles de la carte.

Dans un mode de cette deuxième variante de réalisation, la deuxième antenne RF comprend:

- une première partie d'antenne s'étendant en regard d'une zone périphérique de la couche métallique recouverte par ledit revêtement, au moins une spire de ladite première partie d'antenne s'étendant en regard de la première fente,
- une deuxième partie d'antenne connectée à la première partie d'antenne et agencée au moins en partie en regard d'une partie de la deuxième région de la couche métallique recouverte par ledit revêtement, au moins une spire de ladite deuxième partie d'antenne s'étendant en regard de la deuxième fente (F2),
- une troisième partie d'antenne, connectée électriquement à la deuxième partie d'antenne , et s'étendant en regard de la zone d'évidement pour permettre un couplage avec la première antenne ;

(i) la première partie d'antenne étant configurée pour collecter un courant image induit par des premiers courants de Foucault circulant sur un bord dans la couche métallique lorsque la carte à puce est soumise à un champ électromagnétique dans des conditions opérationnelles de la carte à puce;
(ii) la deuxième partie d'antenne étant configurée pour collecter un courant image induit par des courants de Foucault circulant dans la deuxième région de la couche métallique lorsque la carte à puce est soumise à un champ électromagnétique dans des conditions opérationnelles dites défavorables correspondant à une partie seulement desdites conditions opérationnelles.

En particulier, lorsque la zone d'évidement (ou cavité) est relativement éloignée du champ d'intensité maximale, les conditions opérationnelles peuvent être défavorables.

La première partie d'antenne est agencée en regard d'une zone périphérique de la couche métallique recouverte par ledit revêtement, préférentiellement selon un routage sensiblement rectangulaire qui suit le contour le long des quatre côtés de la carte à puce, notamment dans la première région de la carte au voisinage de la zone d'évidement.

Normalement, quelles que soient les conditions opérationnelles de la carte, le champ magnétique du lecteur de carte génère une boucle d'un courant de Foucault qui circule le long du bord de la carte et qui induit un courant image apte à être collecté par cette première partie de la deuxième antenne.

La première partie de la deuxième antenne permet avantageusement de récupérer l'énergie d'une boucle principale des courants de Foucault circulant le long du bord périphérique de la couche métallique lorsque toute la surface de la carte est exposée à un champ magnétique uniforme généré par l'antenne d'un lecteur de ladite carte, notamment lorsque est centrée par rapport à l'antenne du lecteur de carte à puce.

La deuxième partie de la deuxième antenne permet quant à elle de récupérer efficacement l'énergie des courants de Foucault circulant le revêtement de la carte à puce lorsque la carte à puce est utilisée dans des conditions moins favorables, la carte étant décentrée par rapport à l'antenne du lecteur de carte.

En effet, lorsque la carte est décentrée par rapport à l'antenne du lecteur de sorte que la zone d'évidement et la première antenne s'éloignent du centre de l'antenne du lecteur, la boucle principale du courant de Foucault se retrouve principalement cantonnée dans la deuxième région de la couche métallique, alors en vis-à-vis du champ magnétique d'intensité maximale.

Dans un mode de réalisation, la deuxième région comporte une zone privilégiée d'exploitation des courants de Foucault, cette zone privilégiée étant entièrement recouverte par ledit revêtement, la partie de la spire de la deuxième antenne étant située en vis-à-vis de la deuxième fente au niveau de cette zone privilégiée.

Dans un mode de réalisation, la zone privilégiée d'exploitation des courants de Foucault est un disque centré sur ladite carte et dont le rayon correspond au rayon d'un volume opérationnel de ladite carte.

Ce mode de réalisation permet de garantir que quelles que soient les conditions d'opération de la carte à puce, la deuxième fente de couche métallique se trouve elle-même dans cette zone opérationnelle et qu'une boucle principale du courant de Foucault circule sur le bord de cette fente.

Dans un mode de réalisation, la carte à puce est conforme à la norme EMVCo, la zone d'exploitation des courants de Foucault est un disque de 25mm de rayon centré sur ladite carte.

Lorsque la carte à puce est soumis à un champ magnétique, l'action combinée du courant image acheminé depuis la première partie et/ou la deuxième partie de la deuxième antenne d'une part, et d'un courant induit dans la deuxième partie et/ou la troisième partie de la deuxième antenne par le champ magnétique reçu à travers la couche métallique d'autre part, permet de maximiser la quantité d'énergie collectée dans la deuxième antenne RF à partir du champ magnétique, et donc de garantir un couplage magnétique performant entre les deux antennes RF, ce qui permet de délivrer un maximum d'énergie à la puce RF reliée à la première antenne RF.

En fonctionnement, sous l'effet du champ magnétique auquel est soumise la carte à puce, la puce RF est ainsi capable d'utiliser la deuxième antenne RF couplée avec la première antenne RF pour communiquer avec un lecteur NFC externe (en particulier pour échanger des signaux RF en transmission et/ou réception avec le lecteur NFC). Lorsqu'un utilisateur présente la carte à puce du lecteur NFC, dans des conditions opérationnelles déterminées, une communication sans contact peut ainsi être établie entre le lecteur NFC et la carte à puce, et ce quelle que soit l'orientation de cette dernière vis-à-vis du lecteur NFC. En effet, des courants de Foucault sont générés dans la couche métallique quelle que soit l'orientation de la carte à puce relativement au lecteur NFC. De même, quelle que soit la face de la carte à puce qui est présentée devant le lecteur NFC, la troisième partie d'antenne de la deuxième antenne est capable de collecter une composante de courant induite par le champ magnétique au niveau de la zone d'évidement.

Selon un mode de réalisation particulier, la deuxième antenne RF est configurée de sorte que la troisième partie d'antenne s'étend exclusivement en regard de la zone d'évidement.

Selon un mode de réalisation particulier, les première et troisième parties d'antenne de la deuxième antenne RF sont connectées en parallèle avec un composant capacitif.

L'invention vise également un procédé de fabrication d'une carte à puce à partir d'un corps de carte formé au moins en partie par une couche métallique comprenant une zone d'évidement,, le procédé comprenant :

- recouvrir au moins partiellement, préférentiellement entièrement, la couche métallique par un revêtement plus conducteur que la couche métallique ;
- formation sur ou dans le corps de carte d'une première antenne RF dans ou en regard de la zone d'évidement de la couche métallique ;
- assemblage d'une puce RF avec le corps de carte de sorte que la puce RF est connectée électriquement à la première antenne RF ; et
- formation sur ou dans le corps de carte d'au moins une partie d'antenne RF isolée électriquement de la couche métallique et de la première antenne RF et configurée pour collecter un courant image induit par des premiers courants de Foucault circulant au moins sur le revêtement de la couche métallique et permettre un couplage avec la première antenne.

Dans un mode de réalisation, la zone d'évidement débouche sur un bord périphérique de la couche métallique, ladite au moins une partie d'antenne étant une deuxième antenne RF comprenant :

(i) une première partie d'antenne s'étendant en regard de la couche métallique pour collecter un courant image induit par des premiers courants de Foucault circulant au moins sur le revêtement de la couche métallique ; et
(ii) une deuxième partie d'antenne, connectée électriquement à la première partie d'antenne et s'étendant en regard de la zone d'évidement pour permettre un couplage magnétique entre la première antenne RF et la deuxième antenne RF.

Dans un autre mode de réalisation du procédé de fabrication, le corps de la carte est de forme générale rectangulaire, la couche métallique est constituée par une première région et une deuxième région entièrement délimitées par une droite parallèle à un petit côté de la carte, la première région contenant entièrement la zone d'évidement et sa surface étant plus petite que celle de la deuxième région, une première fente de la couche métallique connectant la zone d'évidement à un bord périphérique de la première région et une deuxième fente de la couche métallique débouchant soit sur un bord périphérique de la couche métallique soit dans la zone d'évidement, la deuxième fente se terminant par une partie fermée dans la deuxième région,

- ladite au moins une partie d'antenne étant une deuxième antenne comportant au moins une spire située en regard de la première fente et au moins une spire située en regard de la deuxième fente.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

La figure 1 représente schématiquement une carte à puce coopérant avec un terminal, selon au moins un mode de réalisation d'une première variante de réalisation de l'invention;

La figure 2 est une vue de dessus (ou dessous) d'une couche métallique constituant une partie d'une carte à puce selon au moins un mode de réalisation particulier de réalisation de cette première variante de réalisation ;

La figure 3 est une vue de dessus (ou dessous) d'une couche métallique constituant une partie d'une carte à puce selon au moins un mode de réalisation particulier de cette première variante de réalisation ;

La figure 4A est une vue éclatée en coupe représentant schématiquement la structure d'une carte à puce selon au moins un mode de réalisation de cette première variante de réalisation ;

La figure 4B est une vue éclatée en coupe représentant schématiquement la structure d'une carte à puce selon au moins un mode de réalisation de cette première variante de réalisation ;

La figure 5 est une vue de détail en coupe d'une carte à puce, et plus particulièrement d'une portion de la carte comprenant une zone d'évidement, selon au moins un mode de réalisation particulier de cette première variante de réalisation ;

La figure 6 est une vue de dessous représentant schématiquement une carte à puce selon au moins un mode de réalisation particulier de cette première variante de réalisation ;

La figure 7 est une vue de dessous représentant schématiquement le fonctionnement d'une carte à puce selon au moins un mode de réalisation particulier de cette première variante de réalisation ;

La figure 8 est une vue de dessous représentant schématiquement le fonctionnement d'une carte à puce selon au moins un mode de réalisation particulier de cette première variante de réalisation ;

La figure 9 représente sous forme d'un diagramme les étapes d'un procédé de fabrication d'une carte à puce de l'invention, selon au moins un mode de réalisation particulier de cette première variante de réalisation .

La figure 10 représente schématiquement une carte à puce coopérant avec un lecteur NFC, selon au moins un mode particulier de réalisation d'une deuxième variante de réalisation de l'invention;

La figure 11 est une vue de dessus (ou dessous) d'une couche métallique d'une carte à puce selon au moins un mode particulier de réalisation de l'invention ;

La figure 12A est une vue éclatée en coupe représentant schématiquement la structure d'une carte à puce selon au moins un mode particulier de réalisation de l'invention ;

La figure 12B est une vue éclatée en coupe représentant schématiquement la structure d'une carte à puce selon au moins un mode particulier de réalisation de l'invention ;

La figure 13 est une vue de détail en coupe d'une portion d'une carte à puce, selon au moins un mode particulier de réalisation de l'invention;

La figure 14 illustre une zone d'exploitabilité des courants de Foucault sur une couche métallique ;

La figure 15 représente une carte à puce centrée par rapport à la source d'un champ magnétique incident ;

La figure 16 représente une carte à puce décentrée par rapport à la source d'un champ magnétique incident ;

La figure 17A représente un premier exemple de couche métallique pouvant être utilisée dans des modes particuliers de mise en oeuvre de l'invention ;

La figure 17B représente un deuxième exemple de couche métallique pouvant être utilisée dans des modes particuliers de mise en oeuvre de l'invention ;

La figure 17C représente un troisième exemple de couche métallique pouvant être utilisée dans des modes particuliers de mise en oeuvre de l'invention ;

La figure 17D représente un quatrième exemple de couche métallique pouvant être utilisée dans des modes particuliers de mise en oeuvre de l'invention ;

La figure 18 représente un exemple d'agencement d'une antenne et d'une couche métallique pouvant être mis en oeuvre dans une carte à puce conforme à un mode particulier de réalisation de l'invention ;

La figure 19 représente une carte à puce conforme à un mode particulier de l'invention ;

La figure 20 illustre un fonctionnement de la carte à puce de la figure 10 ;

La figure 21 représente une autre carte à puce conforme à un mode particulier de l'invention ;

La figure 22 représente sous forme d'un diagramme les étapes d'un procédé de fabrication d'une carte à puce de l'invention, selon au moins un mode de réalisation particulier ; et

La figure 23 déjà décrite représente des conditions opérationnelles d'une carte à puce définies par l'organisation internationale EMVCo.

Description des modes de réalisation

La présente demande revendique la priorité des demandes de brevet français N° FR2113850 déposée le 17/12/2021 et FR2214390 déposée le 23/12/2022 qui sont ici incorporées par référence.

Comme indiqué précédemment, l'invention porte sur des cartes à puce métalliques configurées pour fonctionner en mode sans contact, et concerne également la fabrication de telles cartes à puce. Une « carte à puce métallique » désigne dans le présent document une carte à puce comprenant un métal ou une combinaison (alliage) de métaux, par exemple sous la forme d'une couche métallique ou d'une pluralité de couches métalliques.

Comme indiqué précédemment, une carte à puce sans contact est configurée par nature pour communiquer en sans contact avec l'extérieur, plus particulièrement avec un lecteur NFC externe. A cet effet, une carte à puce sans contact embarque une antenne radiofréquence (RF) pour échanger (recevoir et/ou émettre) des signaux RF avec un lecteur NFC externe. Une telle carte à puce peut en outre avoir la capacité de fonctionner aussi en mode avec contact, en utilisant des contacts externes prévus à cet effet à la surface de la carte : on parle alors de cartes « dual » (ou cartes à double interface de communication), ces cartes étant ainsi capable de fonctionner en mode sans contact et en mode avec contact.

Il existe aujourd'hui une forte demande chez les utilisateurs pour des cartes à puce métalliques, pour notamment les raisons évoquées précédemment (aspects esthétiques, impression de qualité, prestige...). Il est en particulier souhaitable de produire des cartes à puce dont l'essentiel (ou une part importante) du corps de carte est en métal, ou du moins dont le corps de carte comporte une plaque métallique (ou couche métallique), afin d'obtenir une certaine uniformité et qualité dans l'aspect visuel et esthétique de la carte.

Or, lorsqu'une carte à puce sans contact comporte une couche métallique ainsi qu'une antenne RF disposée sur ou au voisinage de l'une des faces de la couche métallique, il a été observé que cette couche métallique perturbe les communications sans contact entre l'antenne RF et l'extérieur, en particulier lorsque la couche métallique est disposée entre l'antenne RF et le lecteur NFC externe avec lequel la carte à puce tente de communiquer, en raison du blindage électromagnétique induit par la couche métallique. Ainsi, selon la position et l'orientation de la carte par rapport au lecteur, il peut être possible ou non d'effectuer une transaction sans contact entre une carte à puce métallique et un lecteur NFC externe. Dans certains cas, une transaction est possible si l'on présente la carte à puce de sorte que l'antenne soit disposée du côté du lecteur NFC (sans que la couche métallique s'interpose entre les deux), mais les communications RF sont perturbées, voire impossibles, si la couche métallique forme une barrière électromagnétique entre l'antenne RF de la carte et le lecteur NFC (la plaque métallique fait office de barrière électromagnétique entre la puce RF et le lecteur NFC). Toutefois, pour que des communications RF puissent être réalisées entre une carte à puce métallique et un lecteur NFC externe, il est généralement nécessaire que la carte comprenne de la ferrite afin de limiter les perturbations électromagnétiques résultant de la partie métallique. Sans ferrite, même en orientant correctement une carte à puce métallique relativement à un lecteur NFC externe, il n'est généralement pas possible d'échanger convenablement des communications RF entre la carte et le lecteur NFC, rendant de ce fait toute transaction impossible (ou tout du moins difficile).

L'invention se propose de pallier notamment les inconvénients et problèmes mentionnés ci-avant. Pour ce faire, l'invention vise une carte à puce comprenant un corps de carte formé au moins en partie par une couche métallique comprenant une zone d'évidement, la couche métallique étant au moins partiellement recouverte par un revêtement plus conducteur que la couche métallique, une puce RF, une première antenne RF disposée dans ou en regard de la zone d'évidement et connectée électriquement à la puce RF, au moins une partie d'antenne RF isolée électriquement de la couche métallique et de la première antenne RF et configurée pour collecter un courant image induit par des premiers courants de Foucault circulant au moins sur le revêtement dans de la couche métallique et permettre un couplage avec la première antenne.

L'invention concerne également un procédé de fabrication de telles cartes à puce. Des modes de réalisation particuliers, ainsi que d'autres aspects de l'invention, sont décrits plus en détail ci-après.

Dans le présent exposé, des exemples de mises en oeuvre de l'invention sont décrits en relation avec une carte à puce de type « dual », c'est-à-dire une carte à double interface de communication, ayant la capacité de communiquer aussi bien en mode avec contact (via des contacts externes) qu'en mode sans contact (via une structure d'antenne RF). On notera toutefois que l'invention peut s'appliquer plus généralement à une quelconque carte à puce configurée pour communiquer en sans contact, et ce qu'elle est la capacité ou non de fonctionner aussi en mode avec contact.

De plus, on considère dans les exemples qui suivent que la carte à puce est une carte bancaire, telle qu'une carte de paiement par exemple. Cette carte à puce peut être conforme à la norme ISO 7816 et peut fonctionner selon le standard EMV, bien que ni l'un ni l'autre de ces aspects ne soit obligatoire pour mettre en œuvre l'invention. Plus généralement, l'invention s'applique à une quelconque carte à puce métallique configurée pour mettre en œuvre une transaction en mode sans contact, y compris des cartes EMV ou des cartes à puce utilisant un autre standard de transaction, par exemple le standard NFC (selon par exemple ISO14443-2 , ISO 10373-6, « EMV Contactless Certification »). De façon générale, la carte à puce de l'invention peut être configurée pour réaliser une transaction d'un type quelconque, telle que des transactions bancaires (transactions de paiement, de transfert, de débit...), des transactions d'authentification, etc.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

Les termes « premier(s) » (ou première(s)), « deuxième(s) », etc. sont utilisés dans ce document par convention arbitraire pour permettre d'identifier et de distinguer différents éléments (tels que des clés, des dispositifs, etc.) mis en œuvre dans les modes de réalisation décrits ci-après.

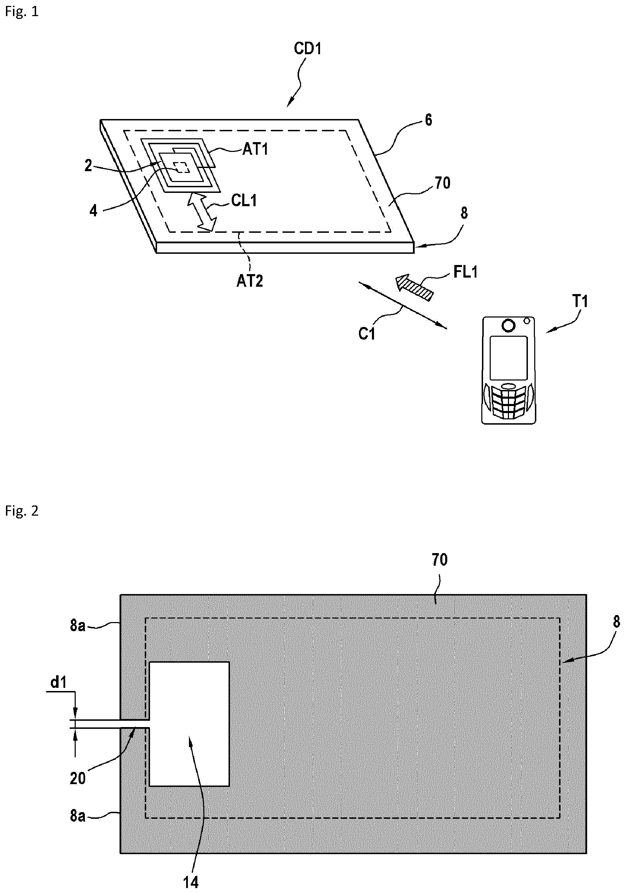

Des modes de réalisation particuliers d'une carte à puce CD1 conforme à une première variante de l'invention sont à présent décrits en référence aux **figures 1-6.**

Comme représenté en **figure 1** selon certains modes de réalisation particuliers, la carte à puce CD1 métallique est configurée pour communiquer en mode sans contact avec l'extérieur, par exemple avec un terminal (ou lecteur) externe T1. A cette fin, la carte à puce CD1 comprend une puce RF 4, un corps de carte 6 et deux antennes RF (ou au moins deux antennes RF), à savoir une première antenne RF ANT1 et une deuxième antenne RF ANT2. La puce RF 4 ainsi que les deux antennes RF ANT1 et ANT2 sont positionnées sur ou dans le corps de carte 6.

Le corps de carte 6 est formé au moins en partie (ou comprend) une couche métallique 8. Cette couche métallique 8 peut être constituée d'un seul métal, tel que de l'acier inox ou de l'aluminium par exemple, ou d'un alliage de plusieurs métaux différents. La couche métallique 8 peut comprendre une pluralité de sous-couches métalliques. Selon un exemple particulier, le corps de carte 6, et plus généralement la carte à puce CD1 est dépourvue de ferrite, ce qui permet de simplifier la fabrication de la carte.

La couche métallique 8 est recouverte au moins partiellement d'un revêtement 70 plus conducteur que la couche 8, par exemple en cuivre, en argent ou en or.

Dans les exemples considérés ici, le corps de carte 6 est au format ID1 d'une carte de crédit, bien que d'autres formes soient possibles pour mettre en œuvre l'invention.

La puce RF 4 est une puce une puce électronique configurée pour établir une communication sans contact C1 avec le terminal externe T1 en utilisant les antennes RF ANT1 et ANT2, comme décrit ci-après. Pour ce faire, la puce RF 4 est connectée électroniquement à la première antenne RF ANT1 mais la deuxième antenne RF ANT2 est isolée électriquement de la puce RF 4 et de la première antenne RF ANT1. Les antennes ANT1 et ANT2 sont en partie en regard l'une de l'autre pour permettre un couplage magnétique entre ces deux antennes et ainsi permettre à la puce RF 4 d'utiliser la deuxième antenne RF ANT2 pour établir une communication sans contact C1 avec le terminal externe T1, comme décrit plus en détail ci-après.

Diverses mises en œuvre de la carte à puce CD1, notamment de la couche métallique 8, du revêtement 70 et des antennes RF ANT1 et ANT2, sont possibles, comme représenté en **figures 2-8.**

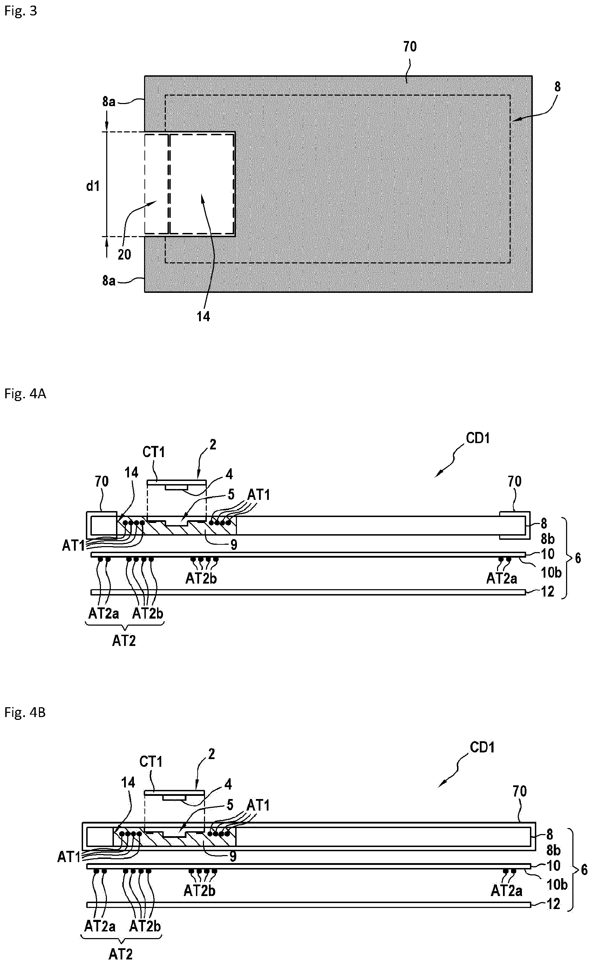

A titre d'illustration, les **figures 2** et **3** représentent seule la couche métallique 8 selon deux modes de réalisation différents. Dans ces deux exemples, la couche métallique 8 est entièrement recouverte du revêtement 70 et comprend une zone d'évidement 14 débouchant sur un bord (ou contour) périphérique 8a de la couche métallique 8. La zone d'évidement 14 est une ouverture (ou zone) traversante ménagée dans la couche métallique 8 pour permettre le positionnement en vis-à-vis de la première antenne RF ANT1 avec une partie de la deuxième antenne RF ANT2 comme décrit ci-après. La forme et les dimensions de cette zone d'évidement 14 peuvent être adaptées selon le cas. A titre d'exemple, la zone d'évidement 14 ménagée dans la couche métallique 8 est rectangulaire.

Plus précisément, dans l'exemple représenté en **figure 2,** la couche métallique 8 comprend une ouverture (ou zone) de raccordement 20 qui connecte ou raccorde le bord périphérique 8a avec la zone d'évidement 14. Cette ouverture de raccordement 20 constitue elle-même une zone d'évidement périphérique qui peut prendre par exemple la forme d'une fente. Autrement dit, la zone d'évidement 14 émerge (ou débouche) sur le bord périphérique 8a via cette ouverture de raccordement 20. Cette zone de raccordement 20 se caractérise par une distance d1 séparant deux bords périphériques opposés de la couche métallique 8, la valeur de cette distance d1 pouvant varier selon le cas.

Ainsi, selon l'exemple représenté en **figure 3,** la distance d1 de la zone de raccordement 20 séparant deux bords périphériques opposés de la couche métallique 8 est identique à la hauteur (ou longueur) de la zone d'évidement 14 elle-même. La zone de raccordement 20 forme ainsi dans la couche métallique 8 une deuxième zone d'évidement qui s'étend dans le prolongement de la première zone d'évidement 14. La zone d'évidement 14 forme ainsi avec la zone de raccordement 20 une encoche dans la couche métallique 8. En d'autres termes, la zone d'évidement 14 s'étend dans cet exemple jusqu'au bord périphérique 8a de la couche métallique 8 (sans que la formation d'une fente ou autre ne soit nécessaire).

La position de la zone d'évidement 14 dans la couche métallique 8 peut varier selon le cas. Selon les exemples particuliers représentés en **figures 2-3,** la zone d'évidement 14 positionnée dans le voisinage d'un bord périphérique 8a de la couche métallique 8, ce qui permet d'assurer un couplage magnétique FL1 performant entre les antennes RF ANT1 et ANT2, comme expliqué plus en détail ci-après. D'autres implémentations sont toutefois possibles, dans lesquelles par exemple la zone d'évidement 14 est positionné au centre (ou substantiellement au centre) de la couche métallique 8, étant entendu que cette zone d'évidement 14 est toujours configurée pour débouchée sur (ou être raccordée à) à un bord périphérique 8a de la couche métallique 8 via une zone de raccordement 20.

L'intérêt de former une telle zone d'évidement 14 dans la couche métallique 8 apparaîtra plus clairement dans la description qui suit. On considère à présent des modes de réalisation particuliers en référence aux **figures 4A-7** dans lesquels la couche métallique 8 comprend une zone d'évidement 14 selon la configuration illustrée en **figure 2.**

En particulier, les **figures 4A et 4B** représentent schématiquement une vue éclatée en coupe de la carte à puce CD1 selon deux modes de réalisation, dans lesquels le revêtement est respectivement uniquement en zone périphérique de la couche métallique ou sur toute sa surface.

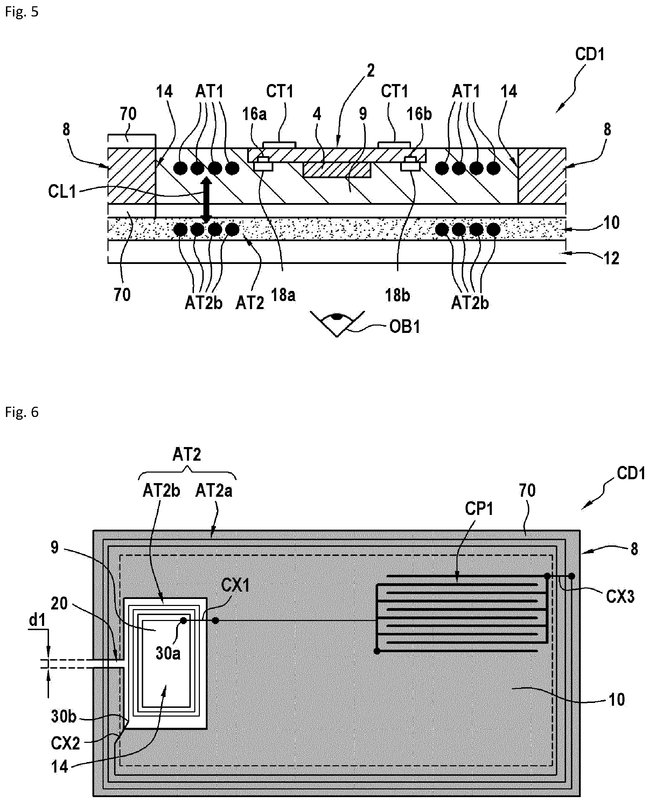

La **figure 5** représente schématiquement une vue de détail en coupe de la carte à puce CD1, selon au moins un mode réalisation particulier.

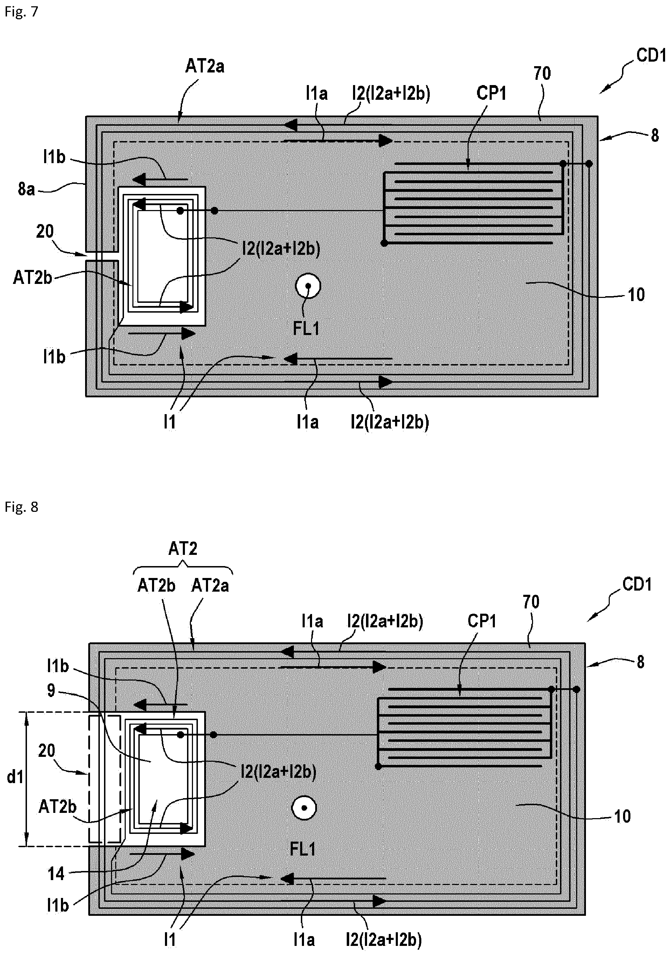

Les **figures 6** et **7** sont des vues de dessous représentant schématiquement la carte à puce CD1 vue depuis sa face inférieure, c'est-à-dire depuis le point de vue d'un observateur OB1 représenté en **figure 5,** de sorte à pouvoir visualiser notamment la deuxième antenne ANT2. Pour faciliter la compréhension des figures, ni la première antenne RF ANT1 ni le module électronique 2 ne sont représentés en **figures 6-7.**

La **figure 7** illustre plus particulièrement la carte à puce CD1 en fonctionnement, comme décrit ultérieurement.

Comme représenté en **figures 4A-7,** on considère que la puce RF 4 est comprise (ou embarquée) dans un module électronique 2, ce dernier étant inséré dans le corps de carte 6. Le module électronique 2 est par exemple positionné dans une cavité 5 ménagée sur la face supérieure du corps de carte 6. Pour ce faire, la zone d'évidement 14 comprend un matériau électriquement isolant 9 dans lequel est ménagée la cavité 5 pour accueillir le module électronique 2. Ainsi, la puce RF 4 est positionnée dans la zone d'évidement 14 (ou, en variante, en regard et au-dessus de la zone d'évidement 14). A noter toutefois que divers aménagements de la puce RF 4 sont possibles. Des variantes sont notamment possibles dans lesquelles la puce RF 4 n'est pas disposée dans, ou en regard de, la zone d'évidement 14.

Selon une variante de réalisation, la puce RF 4 (avec ou sans le module électronique 2) est positionnée sur (ou en regard de) la couche métallique 8. A cette fin, un matériau isolant peut être disposé entre la puce RF 4 et la couche métallique pour assurer l'isolation électrique.

Selon les exemples considérés dans les **figures 4A-7,** le module électronique 2 comporte sur sa face supérieure des contacts externes (ou plages de contact) CT1 configurés pour permettre une communication par contact entre la puce RF 4 un terminal externe prévu à cet effet (par exemple avec le terminal T1). Plus particulièrement, le module électronique 2 peut comprendre un circuit imprimé (ou PCB pour « Printed Circuit Board ») comprenant sur sa face supérieur les contacts externes CT1 et sur sa face inférieure la puce RF 4. Les contacts externes CR1 sont des zones métalliques conçues pour accueillir des broches de connexion d'un terminal externe. Ces contacts externes CT1 peuvent être conformes à la norme ISO 7816, bien que d'autres exemples soient possibles. Le module électronique 2 est disposé dans la carte à puce CD1 de sorte que ses contacts externes CT1 sont accessibles depuis la surface supérieure du corps de carte 6 pour permettre à la puce RF 4 de communiquer par contact avec un terminal externe.

Comme déjà indiqué, des modes de réalisation sont également possibles sans de tels contacts externes CT1. De plus, l'intégration de la puce RF 4 dans à le module électronique 2 tel que représenté sur les figures n'est pas obligatoire, d'autres aménagements de la puce RF 4 étant possibles sans un tel module.

Comme déjà indiqué en référence à la **figure 1,** la carte à puce CD1 comprend deux antennes RF, notées ANT1 et ANT2, qui sont positionnées dans ou sur le corps de carte 8. Chacune des antennes RF ANT1, ANT2 comprend au moins une spire électriquement conductrice de sorte à permettre des échanges de signaux RF entre la carte à puce CD1 et l'extérieur.

Les antennes RF ANT1 et ANT2 peuvent chacune être constituées par exemple d'une piste, fil ou membre électriquement conducteur formant une ou des spires conductrices. On considère dans le cas présent que les première et deuxième antennes RF ANT1, ANT2 comprennent chacune une pluralité de spires conductrices. Diverses techniques de fabrication (filaire, par dépôt, par gravure) bien connues en soi peuvent être utilisées pour réaliser ces antennes RF. Les caractéristiques physiques (forme/taille de l'intersection, longueur de l'antenne, nombre de spire, matériau, etc.) des antennes RF ANT1 et ANT2 peuvent être adaptées au cas par cas afin notamment de permettre des communications sans fil aux fréquences (ou plages de fréquences) souhaitées.

Plus précisément, comme représenté en **figures 4A-7,** la première antenne RF ANT1 comprend une pluralité de spires électriquement conductrices - dites « premières » spires conductrices - disposées dans la zone d'évidement 14. Dans ce cas particulier, la taille de de l'antenne RF ANT1 est donc limitée dans la mesure où ses premières spires conductrices sont contenues dans la zone d'évidement. En variante, la première antenne RF ANT1 peut être disposée, non pas dans la zone d'évidement 14 elle-même, mais en regard (au-dessus) de cette zone d'évidement 14.

Par ailleurs, la deuxième antenne RF ANT2 est isolée électriquement de la couche métallique 8 et de la première antenne RF ANT1.

Cette isolation peut être assurée de différentes manières. Par exemple si la deuxième antenne ANT2 est réalisée par gravure, une couche isolante (en anglais « solder mask ») peut être placée entre le deuxième antenne ANT2 et la couche métallique 8 pour éviter un court-circuit et l'oxydation de la deuxième antenne. Selon un autre exemple, la deuxième antenne ANT2 peut être constituée par un fil conducteur entouré d'une gaine plastique isolante.

En outre, la deuxième antenne RF ANT2 comprend deux parties d'antenne, à savoir une première partie d'antenne AT2a et une deuxième partie d'antenne AT2b, qui sont connectées électriquement l'une à l'autre. Dans cet exemple particulier, cette deuxième antenne RF AT2 est formée dans la couche isolante 10 ou éventuellement sur la face inférieure 10b de la couche isolante 10.

Plus précisément, la première partie d'antenne AT2a comprend une pluralité de spires électriquement conductrices, dites « deuxièmes » spires conductrices, qui s'étendent en regard (ou en vis-à-vis) d'une partie de la couche métallique 8 recouverte de revêtement 70 pour collecter notamment un courant image I2a induit par des courants de Foucault I1 - appelés par la suite « premiers » courants de Foucault - circulant au moins sur ce revêtement, possiblement dans son épaisseur, éventuellement dans la couche métallique 8 si l'effet de peau du revêtement 70 est inférieur à son épaisseur.

Dans le mode de réalisation de la figure 4A, le revêtement 70 n'est présent que sur un bord périphérique de la couche métallique 8.

Dans le mode de réalisation de la figure 4B, le revêtement 70 recouvre toute la couche métallique 8.

Comme décrit ci-après en référence à la **figure 7,** des courants de Foucault sont produits sous l'effet d'un champ magnétique FL1 auquel est soumise la carte à puce. Un tel champ magnétique est généré dans cet exemple **(figure 1)** par un terminal externe T1 avec lequel la carte à puce CD1 coopère en mode sans contact. Lorsque la carte à puce CD1 est exposée au champ magnétique FL1, des courants de Foucault circulent sous la forme de boucles de courant (boucles primaires et boucles secondaires) au moins sur le revêtement 70 de la couche métallique 8. Le phénomène de la formation des courants de Foucault est connu de l'homme du métier et ne sera donc pas décrit en détail dans ce document.

Diverses configurations de la première partie d'antenne AT2a sont possibles pour accomplir la collecte du courant image I2a susmentionné. Comme illustré en **figures 6-7,** on considère dans cet exemple que la première partie d'antenne AT2a (et plus précisément les deuxièmes spires conductrices qui la compose) s'étend en regard d'une zone périphérique de la couche métallique 8 (c'est-à-dire au voisinage du contour périphérique de la couche métallique 8). Cette zone périphérique encercle la zone d'évidement 14 ménagée dans la couche métallique 8. Cette configuration vise à permettre à la première partie d'antenne AT2a de collecter un maximum d'énergie sous forme de courant image induit I2a par les boucles dominantes des courants de Foucault générées en surface du revêtement 70 de la couche métallique 8 sous l'effet d'un champ magnétique FL1 auquel est soumis la carte à puce CD1. Autrement dit, grâce à cette configuration particulière, les premiers de courants de Foucault I1 (à partir desquels est produit le courant image I2 collecté dans la première partie d'antenne AT2a) correspondent à des boucles dominantes des courants de Foucault circulant au moins sur le revêtement de la couche métallique 8 en réponse au champ magnétique FL1. D'autres configurations des deuxièmes spires conductrices de la première partie d'antenne AT2a sont toutefois envisageables.

Ainsi, selon un exemple particulier, la première partie d'antenne AT2a enlace (ou encercle, ou entoure) la deuxième partie AT2b et la première antenne RF ANT1. Ainsi, dans le cas par exemple où la carte à puce CD1 présente un format de carte bancaire classique (format ID1), la première partie d'antenne AT2a peut être disposée le long du contour périphérique de la couche métallique 8 (de préférence au plus près du bord physique de la couche métallique 8), ce contour périphérique étant recouvert du revêtement 70, tout en adoptant cette configuration spatiale d'enlacement. L'écart entre la première partie d'antenne AT2a et le bord périphérique de la couche métallique 8 peut être supérieur ou égal à un écart minimal qui dépend de la technologie d'antenne utilisée (par exemple, l'écart minimal est fixé à environ 500 $\mu$m si la première partie d'antenne AT2a est fabriquée selon une technique dite PCB pour « Printed Card Board », ou fixé à environ 2 mm, voire à environ 3 mm si la première partie d'antenne AT2a est de fabriquée selon une technologie filaire (type filaire). L'écart maximum entre la première partie d'antenne AT2a et le bord périphérique de la couche métallique 8 peut par ailleurs est adapté au cas par cas, dans la mesure où la première partie d'antenne AT2a enlace la deuxième partie AT2b et la première antenne RF ANT1.

Selon un exemple particulier, le corps de carte 6 est au format ID1 d'une carte de crédit et la première partie d'antenne AT2a comprend des deuxièmes spires conductrices qui sont également substantiellement au format ID1.

Par ailleurs, la deuxième partie d'antenne AT2b comprend une pluralité de spires électriquement conductrices, dites « troisièmes » spires conductrices. La deuxième partie d'antenne AT2b est connectée électriquement à la première partie d'antenne AT2a et s'étend en regard de la zone d'évidement 14 pour permettre un couplage CL1 **(figure 5)** par induction magnétique (couplage magnétique) entre la première antenne RF ANT1 et la deuxième antenne RF AT2.

En effet, la couche métallique 8 s'étend dans le corps de carte 6 de sorte à former un blindage électromagnétique (ou barrière électromagnétique) entre les deux faces de la carte à puce DV1. Ainsi, la deuxième partie d'antenne AT2b est isolée électromagnétiquement par la couche métallique 8 vis-à-vis de la face supérieure de la carte à puce CD1 et de l'environnement extérieur se trouvant au voisinage de cette face supérieure. A l'exception de la première antenne RF ANT1 pouvant le cas échéant être disposée dans la zone d'évidement 14, cette zone d'évidement 14 est dépourvue de matériau électriquement conducteur, ce qui permet à la deuxième partie d'antenne AT2b de se coupler électromagnétiquement avec la première antenne RF ANT1 au travers de ladite zone d'évidement 14 **(figure 5),** sans que la couche métallique 8 ne puisse y faire obstacle. Cela permet également un couplage d'énergie direct à partir du champ magnétique incident du terminal T1 et la deuxième partie d'antenne AT2b, ce qui génère une composante de courant I2b comme décrit ci-après en référence notamment aux **figures 7-8.**

Pour établir un couplage magnétique CL1 performant, la deuxième partie d'antenne AT2b est de préférence positionnée en regard, au moins en partie, de la première antenne RF ANT1. De façon générale, la deuxième partie d'antenne AT2b est tout du moins alignée avec, ou en regard de, la zone d'évidement 14 de sorte à ce que le couplage magnétique CL1 puisse être établi. Un décalage peut toutefois être toléré entre les premières spires de la première antenne RF ANT1 et les troisièmes spires de la deuxième partie d'antenne AT2b dans la mesure où la zone d'évidement 9 permet malgré tout d'assurer le couplage magnétique CL1.

Une fois le couplage magnétique CL1 établi entre les antennes RF ANT1 et ANT2 sous l'effet d'un champ magnétique FL1 auquel est soumise la carte à puce CD1, la puce RF 4 peut ainsi utiliser la deuxième antenne RF ANT2, couplée à la première antenne RF ANT1, pour communiquer en mode sans contact avec l'extérieur, à savoir avec le terminal externe T1 dans cet exemple **(figure 1).** Le fonctionnement de la carte à puce CD1 et en particulier de ses antennes RF est décrit plus en détail ultérieurement.

La puce RF 4 peut comprendre par exemple un microcontrôleur (ou un processeur) configuré pour établir une communication sans contact C1 avec l'extérieur de la carte à puce CD1 (avec le terminal externe T1 dans cet exemple) en utilisant les première et deuxième antennes RF ANT1, ANT2 couplées ensemble par induction magnétique.

De manière générale, la première partie d'antenne AT2a de la deuxième antenne RF ANT2 occupe une surface plus importante que la deuxième partie d'antenne AT2b puisque cette dernière est positionnée en regard de la zone d'évidement 14.

Comme déjà indiqué, la puce RF 4 est disposée dans la zone d'évidement 14 dans l'exemple représenté en **figures 4A-7.** Selon une variante, la première antenne RF ANT1 est disposée hors de la zone d'évidement 14, à savoir en regard de la zone d'évidement 14 (en alignement au-dessus de celle-ci), de sorte que la zone d'évidement 14 est intercalée entre les première et deuxième antennes RF ANT1 et ANT2 pour permettre un couplage CL1 par induction magnétique entre lesdites première et deuxième antennes ANT1 et ANT2.

Comme représenté en **figures 4A-5,** la puce RF 4 est connectée électriquement à la première antenne RF ANT1. Dans l'exemple considéré ici, la connexion électrique est assurée via des plots (ou plages) de connexion 16a et 16b dont est équipés le module électronique 2, ces plots étant connectés respectivement à des plots (ou plages) de connexion 18a et 18b prévues à cet effet dans la zone d'évidement 14 (dans le matériau isolant 9 dans cet exemple). Les plots de connexion 18a et 18b sont à leur tour connectés respectivement aux deux extrémités de la première antenne RF ANT1. D'autres manières de connecter la puce RF 4 avec la première antenne RF ANT1 sont toutefois envisageables.

Diverses configurations de la deuxième antenne RF ANT2 sont possibles. Selon un mode de réalisation préféré, la deuxième partie d'antenne AT2b s'étend exclusivement en regard de la zone d'évidement 14. Autrement dit, cette deuxième partie d'antenne AT2b, formée d'une pluralité de troisièmes spires conductrices, est disposée en regard de la zone d'évidement 14 de sorte à ce qu'elle ne s'étend pas en regard de la couche métallique 8. En particulier, la deuxième partie d'antenne AT2b ne se superpose pas (ou ne recouvre pas) la couche métallique 8 en périphérie de la zone d'évidement 14, ce qui permet d'optimiser le flux du champ magnétique auquel est soumis la deuxième partie d'antenne AT2b ainsi que la première antenne RF ANT1. Bien qu'il ne soit pas souhaitable qu'une portion de la deuxième partie d'antenne AT2b s'étende en regard de la couche métallique 8, une certaine tolérance peut être acceptée dans certains cas.

Comme représenté en **figures 1, 4** et **5,** la puce RF 4 (et éventuellement le module électronique 2) peut être alignée ou centrée vis-à-vis de la zone d'évidement 4. Ainsi, dans les exemples considérés, les spires conductrices de la première antenne RF ANT1 s'étendent sous la forme d'un enroulement autour de la puce RF 4 dans la zone d'évidement 14. Cet arrangement permet de positionner la puce RF 4 au plus proche de la première antenne RF ANT1 et ainsi de limiter la complexité de fabrication de la carte à puce CD1. Comme déjà indiqué, d'autres mises en œuvre sont toutefois possibles où la puce RF 4 n'est pas positionnée dans, ni même en regard de, la zone d'évidement 14.

La puce RF 4, et plus généralement le module électronique 2, peuvent être aménagés dans la couche isolante 9 (appelé couramment « inlay »). Cette configuration permet de faciliter le montage de la puce RF 4 et de la première antenne RF ANT1 dans le corps de carte 6.

Comme représenté en **figure 6,** la carte à puce CD1 peut en outre comprendre un composant capacitif CP1 connecté électriquement à la deuxième antenne RF ANT2. Dans les exemples considérés ici, le composant capacitif CP1 est disposé dans la couche isolante 10 ou sur la face inférieure 10b de cette couche isolante 10. Une fois le couplage magnétique CL1 établi, les antennes RF ANT1 et ANT2 sont connectées en parallèle avec le composant capacité CP1. Ce composant capacitif CP1 forme ainsi avec les antennes RF ANT1 et ANT2 un circuit RLC permettant d'adapter la fréquence de résonnance de la deuxième antenne RF ANT2 de sorte à ce qu'elle soit par exemple égale à 13,56 MHz, ce qui permet une communication C1 en mode sans contact de type RFID avec un lecteur T1 RFID (par exemple selon la norme ISO14443/ ISO 10373, notamment la version actuelle ISO/IEC 10373-6:2020 ou l'une quelconque des versions antérieures, ou une quelconque version ultérieure).

Dans les exemples représentés en **figures 6-7,** le composant capacitif CP1 est de type interdigital et comprend deux jeux opposés de doigts conducteurs entremêlés les uns avec les autres, d'autres formes de condensateur étant toutefois possibles (condensateur à plaques parallèles, condensateur discret monté en surface, condensateur à fils parallèles, etc.). A noter que la capacité « interdigitée » CP1 (avec entremêlement de doigts conducteurs disposées en face à face) est représentée de façon schématique dans les **figures 6-7** (et en **figure 8** décrite ci-après) et ne constitue pas nécessairement la mise en œuvre la plus adaptée de la capacitance CP1 dans la carte à puce CD1. L'on pourrait préférer par exemple la réalisation de la capacitance CP1 sous la forme d'une capacité à plaques parallèles de part et d'autre de la couche isolante 10 ou d'une capacité discrète de type « CMS » (pour « composant monté en surface »).

Comme représenté en **figures 6-7,** on considère par exemple qu'une première extrémité 30a de la deuxième partie d'antenne AT2b est connectée via une première connexion CX1 avec le composant capacitif CP1 et qu'une deuxième extrémité 30b de la deuxième partie d'antenne AT2b est connectée via une deuxième connexion CX2 avec une première extrémité de la première partie d'antenne AT2a. Par ailleurs, le composant capacitif CP1 est connecté via une troisième connexion CX3 avec une deuxième extrémité de la première partie d'antenne AT2a.

La puce RF 4 est ainsi configurée pour communiquer en sans contact en utilisant la deuxième antenne RF ANT2 lorsque cette dernière est couplée magnétiquement avec la première antenne RF ANT1. En outre, la puce RF 4 peut le cas échéant communiquer en mode par contact avec l'extérieur via les contacts externes CT1, bien que des variantes sans de tels contacts externes soient possibles.

Comme représenté en **figures 4-7,** le corps de carte 6 peut en outre comprendre au moins une couche isolante externe 12 ménagée sur la face inférieure 10b de la couche isolante 10 de sorte à recouvrir et protéger la deuxième antenne RF ANT2. Les première et deuxième parties d'antenne AT2a et AT2b se trouvent ainsi intercalées entre la couche isolante interne 10 et la couche isolante externe 12 dans cet exemple particulier. Au moins une couche isolante de protection peut également être ménagée si besoin sur la face supérieure du corps de carte.

La carte à puce CD1 telle que décrite précédemment en référence aux **figures 1-2** et **4-6** est à présente décrite en cours de fonctionnement en référence à la **figure 7,** selon au moins un mode de réalisation particulier. On considère toujours ici que la couche métallique 8 présente une configuration telle qu'illustrée en **figure 2** bien que des variantes soient possibles.

On suppose que la carte à puce CD1 est positionnée à portée de (dans le voisinage du) terminal externe T1 de sorte à être exposée au champ magnétique FL1 émanant du terminal T1. Sous l'effet du champ magnétique FL1 auquel est soumise la carte à puce CD1, des courants de Foucault - notés généralement I1 - sont générés dans la couche métallique 8. Ces courants de Foucault I1 circulent sous forme de boucles de courant en surface de la couche métallique 8. Selon un phénomène physique bien connu, des boucles dominantes et des boucles secondaires, de courant de Foucault, sont ainsi générées en surface de la couche métallique 8 en réaction au champ magnétique FL1.

Comme représenté en **figure 7,** on note I1a des courants de Foucault - dits premiers courants de Foucault - correspondant à des boucles dominantes circulant en surface du revêtement 70 de la couche métallique 8 au voisinage du contour périphérique de ladite couche métalliques 8. On note I1b des courants de Foucault - dits deuxièmes courants de Foucault - correspondant à des boucles secondaires circulant en surface du revêtement 70 de la couche métallique 8 au voisinage du contour périphérique de la zone d'évidement 14. Puisque les courants de Foucault circulent en boucles fermées, les courants de Foucault I1b sont en réalité la continuité des courants de Foucault I1a au voisinage du contour périphérique de la zone d'évidement 14. Comme cela apparaît de la **figure 7,** les deuxièmes courants de Foucault I1b circulent, au voisinage de la deuxième partie d'antenne AT2b, dans un sens de rotation (ou sens de circulation) opposé à celui des premiers courants de Foucault I1a circulant sur le revêtement 70 au voisinage du contour périphérique de la couche métallique 8. A titre d'exemple, on considère dans cet exemple que les premiers et deuxièmes courants de Foucault I1a, I1b circulent selon respectivement les sens horaire et antihoraire, une configuration inverse étant toutefois possible selon l'orientation du champ magnétique FL1 considéré. La circulation en sens opposé des courants de Foucault I1a et I1b résulte en particulier de la continuité des courants de Foucault mentionnée ci-avant, ainsi que de la présence de la zone d'évidement 14 qui est reliée dans cet exemple par la fente de raccordement 20 au contour périphérique 8a de la couche métallique 8.

Comme expliqué plus en détail ci-après, le courant I2 circulant dans la deuxième antenne RF ANT2 est un courant induit résultant de deux composantes, à savoir : un courant image I2a induit par les premiers courants de Foucault I1 circulant sur le revêtement 70 de la couche métallique 8 au voisinage de la première partie d'antenne AT2a ; et un courant I2b qui est induit directement dans la deuxième partie d'antenne AT2b par le champ magnétique incident FL1 au travers de la zone d'évidement 14 (I2 = I2a + I2b). La structure même de la carte à puce CD1 est conçue pour conduire à cette double contribution des courants induits I2a et I2b pour collecter dans la deuxième antenne RF un courant induit global I2 le plus important possible.

Plus précisément, la première partie d'antenne AT2a s'étendant en regard du revêtement 70 de la couche métallique 8 collecte un courant image I2a induit par les premiers courants de Foucault I1a circulant sur ce revêtement sous l'effet du champ magnétique FL1 **(figure 7).** Ces premiers courants de Foucault I1a correspondent à des boucles dominantes circulant en surface de la couche métallique 8 au voisinage des spires de la première partie d'antenne AT2a. Comme déjà indiqué, la première partie d'antenne AT2a peut s'étendre de préférence en regard d'une zone (ou bande) périphérique de la couche métallique 8 recouverte du revêtement 70 pour collecter un maximum d'énergie généré par les boucles dominantes des courants de Foucault. Les premiers courants de Foucault I1a circulant dans le voisinage de la première partie d'antenne ANT1a (dans cet exemple en périphérie de la couche métallique 8) produisent un effet qui s'oppose au champ magnétique incident FL1. Le courant induit I2a collecté dans les spires de la première partie d'antenne AT2a est lui-même un effet de réaction aux premiers courants de Foucault I1a.

Ainsi, le courant image I2a induit par les premiers courants de Foucault I1a est acheminé par conduction électrique jusqu'à la deuxième partie d'antenne AT2b, du fait de la continuité électrique entre les première et deuxième parties d'antenne AT2a, AT2b qui sont connectées ensemble. Le courant image I2a circule ainsi dans les spires de la deuxième partie d'antenne AT2b positionnée en regard de la zone d'évidement 14. Comme illustré en **figure 7,** le courant image I2a circule selon le même sens de rotation (ou même sens de circulation) dans les spires de la première partie d'antenne AT2a et dans celles de la deuxième partie d'antenne AT2b, à savoir selon le sens antihoraire dans cet exemple. Cependant, du fait de la présence dans la couche métallique 8 de la zone d'évidement 14 connectée via la fente de raccordement 20 au bord périphérique 8a, les deuxièmes courants de Foucault I1b (boucles secondaires) circulent au voisinage de la zone d'évidement 14, en surface de la couche métallique 8, selon un sens de rotation (ou sens de circulation) opposé à celui des premiers courants de Foucault I2a circulant en périphérie de la couche métallique 8. A titre d'exemple, les deuxièmes courants de Foucault I1b circulent ici dans le sens antihoraire tandis que les premiers courants de Foucault I1a circulent suivant le sens horaire. Aussi, les deuxièmes courants de Foucault I1b circulant en périphérie de la zone d'évidement 4 contribuent à amplifier le courant image I1a circulant dans les spires de la deuxième partie d'antenne AT2b.

Comme déjà indiqué, la deuxième partie d'antenne AT2b collecte en outre dans ses spires un courant I2b qui est induit directement par le champ magnétique incident FL1 capté au niveau de la zone d'évidement 14 par la deuxième partie d'antenne AT2b. Dans cet exemple, le champ magnétique FL1 est dirigé depuis la face supérieure de la carte à puce CD1 vers sa face inférieure. Aussi, la composante de courant I2b induite dans la deuxième partie d'antenne AT2b circule également dans le sens antihoraire et s'ajoute donc au courant image I2a. Puisque les deux composantes de courant I2a et I2b circulent dans la même direction (composantes en phase) dans la deuxième antenne ANT2, elles s'ajoutent pour contribuer ensemble à la génération du courant induit global I2 circulant dans la deuxième antenne ANT2.

Le courant global I2 circulant dans la deuxième partie d'antenne AT2b induit à son tour un champ magnétique causant un couplage magnétique CL1 entre la première antenne RF ANT1 et la deuxième partie d'antenne RF AT2b, et donc a fortiori entre la première antenne RF ANT1 et la deuxième antenne RF ANT2. L'action combinée du courant image I2a acheminé depuis la première partie d'antenne AT2a d'une part, et du courant I2b induit par le champ magnétique FL1 au niveau de la zone d'évidement 14 dans la deuxième partie d'antenne AT2b d'autre part, permet de maximiser la quantité d'énergie collectée dans la deuxième antenne RF ANT2 à partir du champ magnétique FL1, et donc de garantir un couplage magnétique CL1 performant entre les deux antennes RF ANT1, ANT2, ce qui permet de délivrer un maximum d'énergie à la puce RF 4 reliée à la première antenne RF ANT1.

En fonctionnement, sous l'effet du champ magnétique FL1 auquel est soumise la carte à puce CD1, la puce RF 4 est ainsi capable d'utiliser la deuxième antenne RF ANT2 couplée avec la première antenne RF ANT1 pour communiquer avec le terminal externe T1 (en particulier pour échanger des signaux RF en transmission et/ou réception avec le terminal T1). Lorsqu'un utilisateur présente la carte à puce CD1 au voisinage du terminal T1, une communication sans contact peut ainsi être établie entre le terminal T1 et la carte à puce CD1, et ce quelle que soit l'orientation de cette dernière vis-à-vis du terminal T1. En effet, les courants de Foucault I1 (et en particuliers les premiers courants de Foucault I1) sont générés dans la couche métallique 8 quelle que soit l'orientation de la carte à puce CD1 relativement au terminal T1. De même, quelle que soit la face de la carte à puce CD1 qui est présentée devant le terminal T1, la deuxième partie d'antenne AT2b de la deuxième antenne ANT2 est capable de collecter la composante de courant I2b induite par le champ magnétique FL1 au niveau de la zone d'évidement 14.

Comme déjà indiqué, divers arrangements de la carte à puce CD1 peuvent être envisagés, notamment en ce qui concerne la configuration de forme, dimensions, position, etc. de la zone d'évidement 14 et de l'ouverture de raccordement 20 connectant la zone d'évidement 14 au bord périphérique 8a de la couche métallique 8 **(figures 2-7)**. Ainsi, la **figure 8** est une vue de dessous représentant schématiquement le fonctionnement d'une carte à puce CD1 selon au moins un mode de réalisation particulier, lorsque cette carte est soumise à un champ magnétique FL1 émanant par exemple d'un terminal externe T1 **(figure 1)**. Dans l'exemple de la **figure 8,** la couche métallique 8 est configurée comme illustrée en **figure 3,** de sorte que la zone de raccordement 20 forme dans la couche métallique 8 une deuxième zone d'évidement qui s'étend dans le prolongement de la première zone d'évidement 14. La zone d'évidement 14 forme ainsi avec la zone de raccordement 20 une encoche dans la couche métallique 8. En d'autres termes, la zone d'évidement 14 s'étend dans cet exemple jusqu'au bord périphérique 8a de la couche métallique 8 (sans que la formation d'une fente ou autre ne soit nécessaire).

La description ci-dessus relative à l'arrangement et au fonctionnement de la carte à puce CD1 en référence aux **figures 1-7** s'applique de façon analogue à la carte à puce CD1 de la **figure 8.**

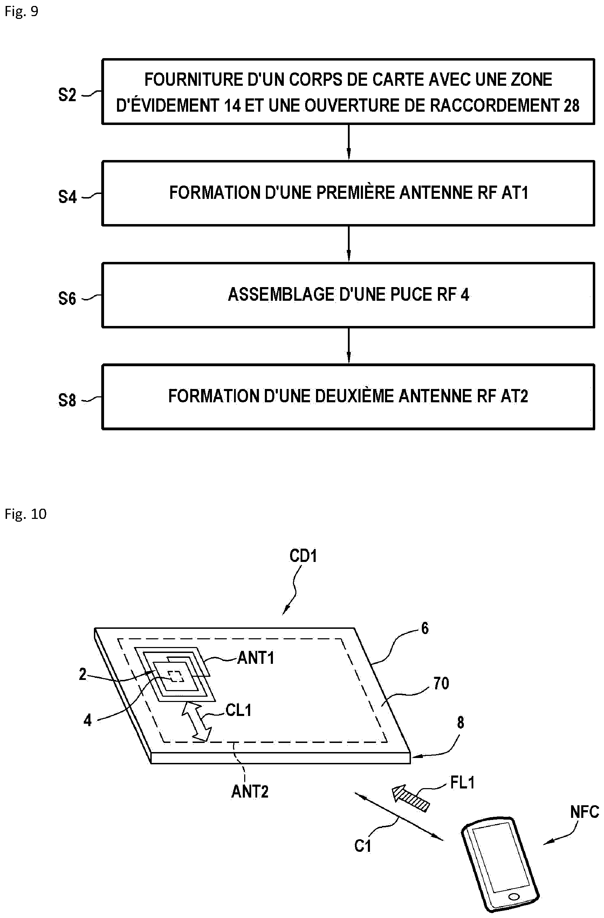

La **figure 9** représente schématiquement un procédé de fabrication de l'une des cartes à puce CD1 décrites ci-avant, selon au moins un mode de réalisation particulier. La description ci-avant de la carte à puce CD1 selon divers modes de réalisation en référence aux **figures 1-8** s'applique par analogie au procédé de fabrication illustré en **figure 9.**

Au cours d'une étape S2 de fourniture, on forme (ou fournit) un corps de carte 6 comprenant une couche métallique 8 comme précédemment décrite. En particulier, ce corps de carte 6 est formé au moins en partie par une couche métallique 8, cette couche métallique 8 comprenant une zone d'évidement 14 débouchant sur un bord périphérique 8a de la couche métallique, comme déjà décrit.

Au cours d'une étape S4 de formation, une première antenne RF ANT1 est formée (ou assemblée) sur ou dans le corps de carte 6 dans ou en regard de la zone d'évidement 14 de la couche métallique 8, comme déjà décrit.

Au cours d'une étape S6 d'assemblage, une puce RF 4 est assemblée avec le corps de carte 6 de sorte que la puce RF 4 est connectée électriquement à la première antenne RF, comme précédemment décrit.

Au cours d'une étape S8 de formation, une deuxième antenne RF ANT2 est formée (ou assemblée) sur ou dans le corps de carte 6 de sorte que la deuxième antenne RF ANT2 est isolée électriquement de la couche métallique 8 et de la première antenne RF ANT1, comme déjà décrit. En particulier, l'étape S8 de formation est réalisée de sorte que la deuxième antenne RF comprend :

- une première partie d'antenne AT2a s'étendant en regard de la couche métallique pour collecter un courant image I2a induit par des premiers courants de Foucault I1a circulant dans la couche métallique ; et

- une deuxième partie d'antenne AT2b, connectée électriquement à la première partie d'antenne AT2a, et s'étendant en regard de la zone d'évidement pour permettre un couplage FL1 par induction magnétique entre la première antenne RF et la deuxième antenne RF.

La **figure 10** représente une carte à puce CD2 selon une deuxième variante de réalisation de l'invention.

La carte à puce CD2 est de forme générale rectangulaire (les angles étant légèrement arrondis).

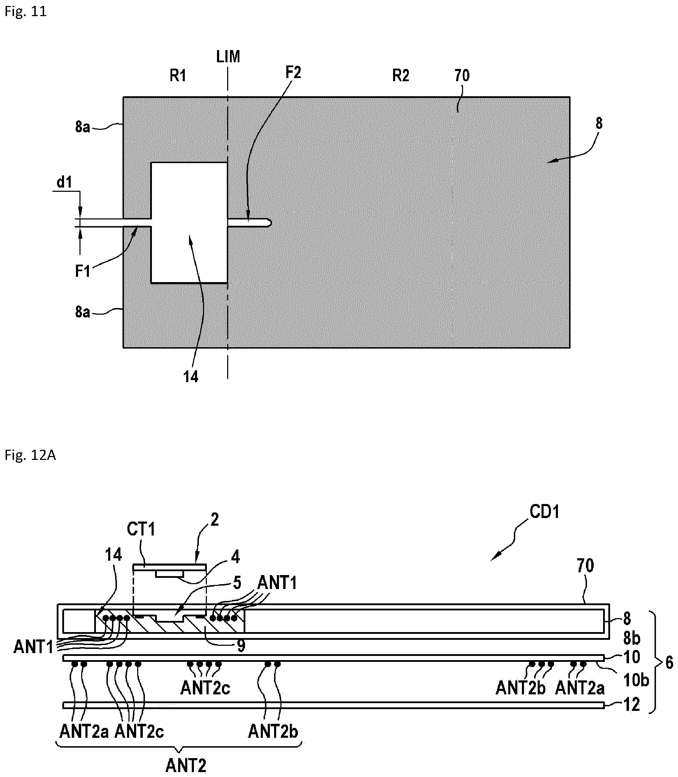

Comme représenté à la **figure 11,** dans cette deuxième variante de réalisation, on considère que la couche métallique est constituée par deux régions R1, R2 délimitées par une droite LIM parallèle à un petit côté de la carte, la première région R1 contenant entièrement la zone d'évidement 14 et sa surface étant plus petite que celle de la deuxième région R2.

Dans le mode de réalisation représenté à la figure 11, la droite LIM est tangente à la zone d'évidement 14 sur son côté le plus proche du centre de la carte à puce.

Dans l'exemple représenté en **figure 11,** la couche métallique 8 comprend une première fente F1 qui connecte ou raccorde un bord périphérique 8a de la première région R1 avec la zone d'évidement 14.

On considère à présent des modes de réalisation particuliers dans lesquels la couche métallique 8 comprend une zone d'évidement 14 selon la configuration illustrée en **figure 11.**

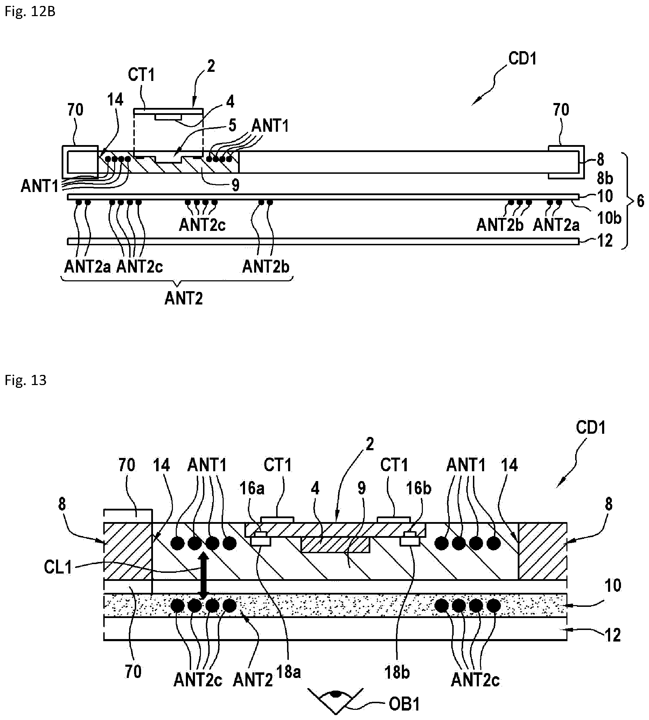

En particulier, les **figures 12A** et **12B** représentent schématiquement une vue éclatée en coupe de la carte à puce CD2 et la **figure 13** représente schématiquement une vue de détail en coupe de la carte à puce CD2, selon au moins un mode réalisation particulier.

Dans le mode de réalisation représenté aux **figures 12A, 12B et 13,** le corps de carte 6 comprend au moins une couche isolante externe 12 ménagée sur la face inférieure 10b de la couche isolante 10 de sorte à recouvrir et protéger la deuxième antenne RF ANT2.

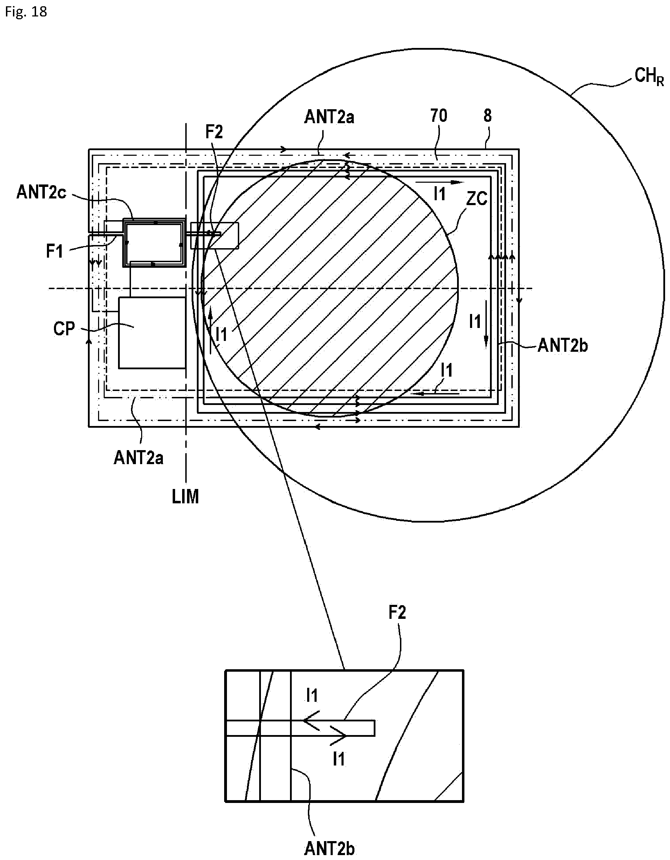

Comme illustré à la **figure 18,** et pour faciliter la description, on considère que la deuxième antenne RF ANT2 comprend au moins trois parties d'antenne, à savoir une première partie d'antenne ANT2a, une deuxième partie d'antenne ANT2b, et une troisième parties d'antennes ANT2c qui sont connectées électriquement l'une à l'autre.

Plus précisément, les première et deuxième parties d'antenne ANT2a et ANT2b comprennent une pluralité de spires électriquement conductrices, qui s'étendent en regard (ou en vis-à-vis) de la couche métallique 8 recouverte de revêtement 70 pour collecter un courant image induit par des courants de Foucault I1 circulant dans la couche métallique 8 lorsque celle-ci est soumise à un champ magnétique incident.

Dans le mode de réalisation de la figure 12A, le revêtement 70 recouvre entièrement la couche métallique 8.

Dans le mode de réalisation de la figure 12B, le revêtement 70 ne recouvre que la périphérie de la couche métallique 8.

Plus précisément et comme expliqué en détails ci-après, la première partie d'antenne ANT2a (respectivement la deuxième partie d'antenne ANT2b) est agencée pour collecter de façon efficace les courants de Foucault circulant sur le revêtement 70 de la couche métallique lorsque la carte à puce CD2 est centrée par rapport à l'antenne du lecteur NFC (respectivement dans une position décentrée par rapport à l'antenne du lecteur NFC).

Dans ce document on considérera que la carte est centrée par rapport à l'antenne du lecteur NFC lorsque toute la surface de la carte est exposée à un champ magnétique uniforme d'intensité maximale généré par l'antenne du lecteur NFC.

Diverses configurations de la deuxième antenne RF ANT2 sont possibles. Selon un mode de réalisation préféré, la troisième partie d'antenne ANT2c s'étend exclusivement en regard de la zone d'évidement 14. Autrement dit, cette troisième partie d'antenne ANT2c, formée d'une pluralité de spires conductrices, est disposée en regard de la zone d'évidement 14 de sorte à ce qu'elle ne s'étend pas en regard de la couche métallique 8. En particulier, la troisième partie d'antenne ANT2c ne se superpose pas (ou ne recouvre pas) la couche métallique 8 en périphérie de la zone d'évidement 14, ce qui permet d'optimiser le flux du champ magnétique auquel est soumis la troisième partie d'antenne ANT2b ainsi que la première antenne RF ANT1. Bien qu'il ne soit pas souhaitable qu'une portion de la troisième partie d'antenne ANT2c s'étende en regard de la couche métallique 8, une certaine tolérance peut être acceptée dans certains cas.

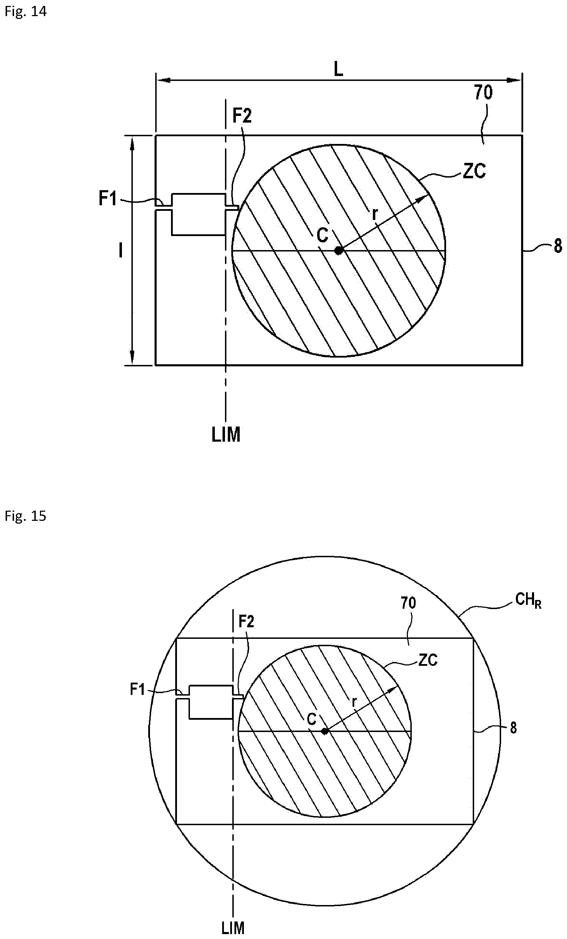

La **figure 14** illustre de façon hachurée, pour un mode particulier de réalisation de l'invention, une zone ZC privilégiée d'exploitation des courants de Foucault qui circulent sur le revêtement 70 de la couche métallique 8 lorsque la carte à puce est exposée à un champ magnétique dans des conditions déterminées, cette zone privilégiée ZC entièrement recouverte du revêtement 70 étant comprise dans la région R2 de la couche métallique 8.

Cette figure 5 se place, à titre illustratif simplement, dans le contexte particulier des conditions opérationnelles définies par l"organisme international EMVCo et rappelées précédemment en référence à la **figure 23.**

En supposant que le lecteur possède une antenne circulaire et qu'il produit un champ magnétique uniforme, dès lors que la surface métallique n'est plus entièrement en vis-à-vis d'un champ uniforme, la boucle dominante ne suit plus les contours de la carte, mais maximise la surface de cette boucle en vue directe avec le champ magnétique d'intensité maximum.

Autrement dit, en première approximation, la boucle dominante délimite la projection de ce champ sur la surface de la carte.

Dans un mode de réalisation de l'invention, la zone privilégiée ZC d'exploitation des courants de Foucault peut être une zone de la surface de la carte qui est soumise à un champ magnétique uniforme d'intensité maximale quelles que soient les conditions opérationnelles de la carte.

Par exemple, sur **la figure 14** on a représenté une carte à puce au format ID1 (longueur L de 85,6mm et une largeur l de 54,0mm), C le centre de la carte, assimilé par la suite au centre de la couche métallique 8, et une zone ZC d'exploitabilité des courants de Foucault constituée par un disque de centre C et de rayon r de 2,5 cm.

Les inventeurs ont déterminé que quelle que soit la position du centre C de la carte dans le volume opérationnel défini par l'organisme EMVCo, une telle zone privilégiée d'exploitabilité ZC (disque de rayon 25mm au centre de la carte) est intégralement comprise dans un champ électromagnétique généré par l'antenne du lecteur NFC d'intensité suffisante pour que des courants de Foucault circulant dans cette zone puissent être exploités par l'invention.

Sur la **figure 15,** on a représenté par un cercle $CH_R$ délimitant un champ magnétique d'intensité maximale généré par un lecteur NFC. Cette figure suppose une antenne de lecteur NFC parfaitement circulaire et symétrique en rotation.

Sur cette figure le centre C de la carte à puce CD2 est situé au centre du cercle $CH_R$.

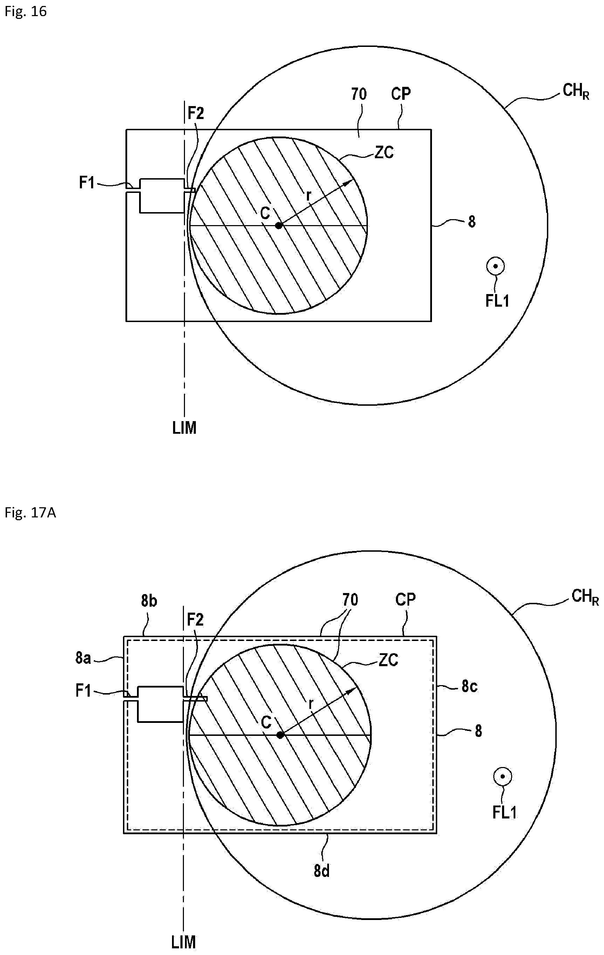

Sur la **figure 16,** on a représenté la carte à puce CD2, le centre C de la carte à puce CP étant décalé de 25 mm par rapport au centre du cercle $CH_R$ ; ce décalage de 25 mm correspondant au décalage maximum de la carte dans le volume opérationnel défini par EMVCo (point 6 de la figure 23). Dans le mode de réalisation de la figure 16, le revêtement 70 recouvre toute la couché métallique 8.

Sur les figures 17A à 17D, on a représenté dans quatre exemples, une couche métallique 8 recouverte au moins dans la zone privilégiée ZC du revêtement 70 et comportant :

(i) une zone d'évidement 14 reliée par une première fente F1 au bord 8a correspondant au petit côté de la couche métallique 8 le plus proche de la zone d'évidement ; et

(ii) une fente F2, remarquable en ce qu'elles débouche soit sur un bord de la couche métallique 8 recouvert de revêtement 70, soit dans la zone d'évidement 14 et en ce qu'elle comporte une extrémité fermée située dans la deuxième région R2 de la couche métallique recouverte de revêtement 70, et dans les exemples des figures 17A à 17C plus précisément dans une zone privilégiée ZC d'exploitabilité des courants de Foucault.

A la figure 17A, le revêtement métallique est présent uniquement sur la périphérie de la couche métallique 8 et dans la zone privilégiée ZC.

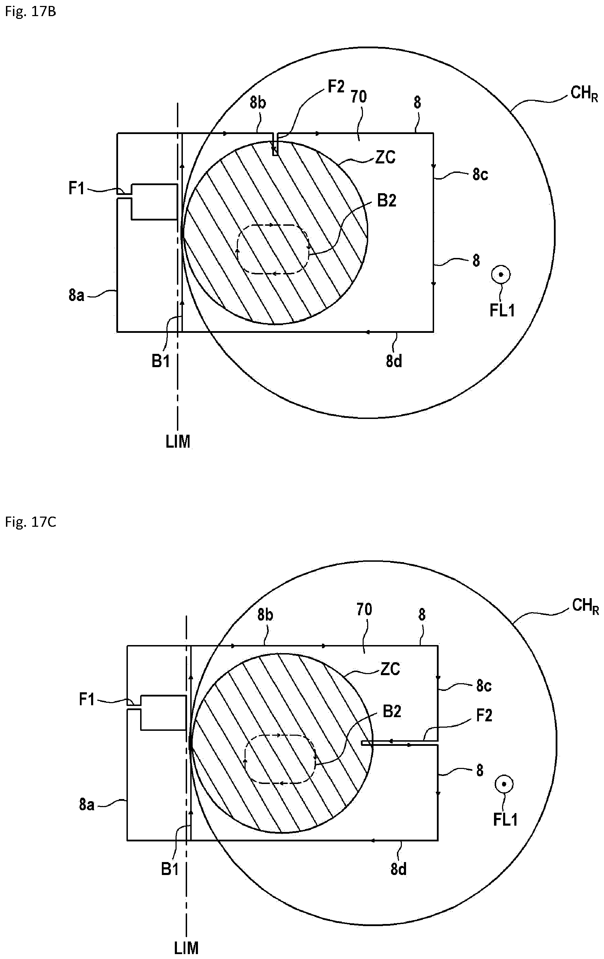

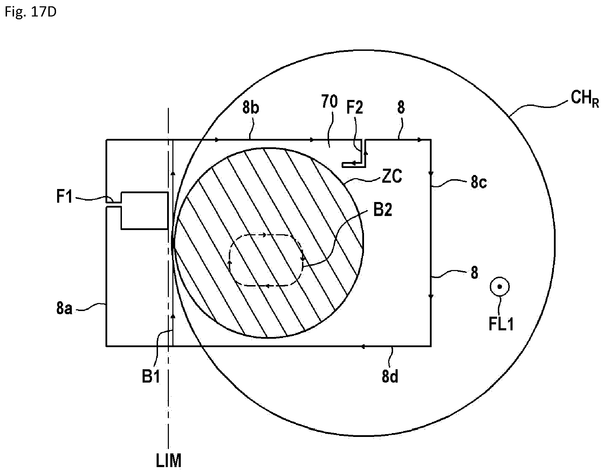

Aux figures 17B, 17C et 17D, la couche métallique 8 est entièrement recouverte de revêtement 70.

Sur ces figures 17A à 17D, le symbole FL1 représente le sens du champ magnétique du lecteur NFC. Ce champ magnétique génère des boucles de courant de Foucault sur le revêtement 70 de la couche métallique 8. Par souci de simplicité, seules deux boucles B1, B2 ont été représentées dont une boucle dominante B1.

Dans les quatre exemples, les fentes F1 et F2 sont ainsi agencées pour laisser passer le champ magnétique généré par un lecteur de la carte à puce et pour être parcourues par un courant image d'un courant circulant dans une boucle d'un courant de Foucault circulant sur la couche métallique 8.

Ces fentes F2 permettent d'orienter les courants de Foucault pour que ces derniers soient en phase avec le flux magnétique issu du terminal autour de la fente, et ainsi que les courants de Foucault autour de la fente ne s'opposent pas à ce flux magnétique.

Sur la **figure 18** on a représenté en plus de la couche métallique 8, une antenne ANT2 (deuxième antenne au sens de l'invention) ANT2 implémentée sur une couche de plastique non représentée.

Sur cette figure on a représenté cette antenne en trois parties, ci-après appelées première partie d'antenne ANT2a, deuxième partie d'antenne ANT2b et troisième partie d'antenne ANT2c.

L'antenne ANT2 est configurée de sorte que le courant circule dans le même sens dans les première, deuxième et troisième parties d'antenne ANT2a, ANT2b, ANT2c.

Dans le mode de réalisation de la **figure 18,** la première partie d'antenne ANT2a est la partie la plus périphérique. Elle est en agencée en regard d'une partie de la couche métallique 8 recouverte de revêtement 70 et s'étend le long des quatre bords de la couche métallique 8. Elle comporte au moins une spire qui chevauche la première fente F1.

Dans le mode de réalisation de la figure 18, la deuxième partie d'antenne ANT2b est connectée à la première partie d'antenne ANT2a. La deuxième partie d'antenne ANT2b est remarquable en ce qu'elle est agencée en regard de la deuxième région R2 de la couche métallique 8, recouverte de revêtement 70, et qu'elle a au moins une spire en regard de la deuxième fente.

Ainsi, au moins une spire de l'antenne ANT2b est en mesure de capter un courant image induit par un courant circulant dans une boucle principale d'un courant de Foucault généré par un champ magnétique incident dans les conditions opérationnelles de la carte à puce, lorsque cette boucle se situe dans la deuxième région R2.

Dans le mode de réalisation de la figure 18, la troisième partie d'antenne ANT2c termine la deuxième antenne ANT2. C'est la partie de l'antenne ANT2 qui ne se superpose pas avec la couche métallique 8 mais qui se superpose avec au moins une partie de la zone d'évidement 14.

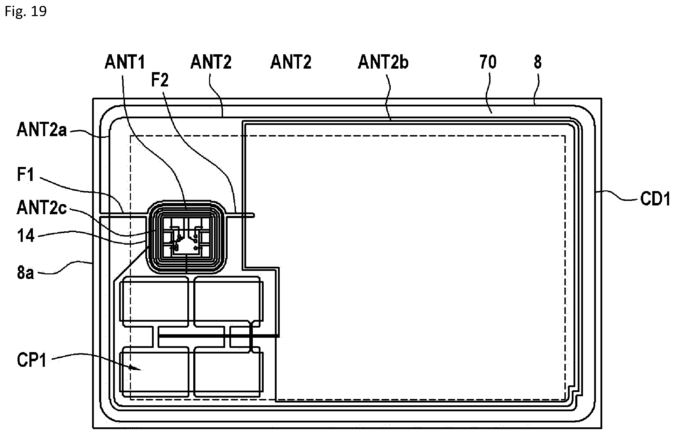

La **figure 19** représente une carte à puce CD2 conforme à un mode de réalisation de l'invention. Dans le mode de réalisation décrit ici, la carte CD2 comporte un élément capacitif CP1 connecté en parallèle à la deuxième antenne ANT2.

Les exemples de fentes F2 représentées aux figures 17 ne sont que des exemples non limitatifs. Toute fente débouchant soit dans la cavité 14 soit sur un bord de la carte et se terminant par une extrémité fermée dans la deuxième région R2, de préférence dans une zone ZC privilégiée d'exploitabilité des courants de Foucault peut être utilisée dans le contexte de l'invention.

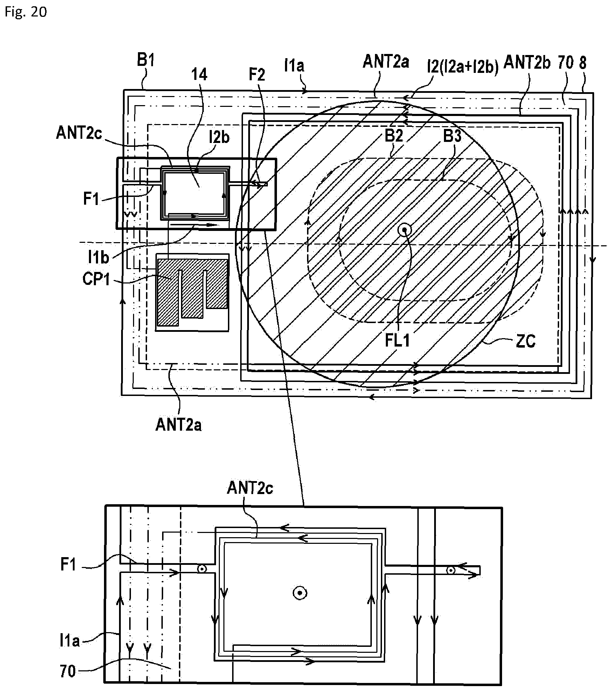

La **figure 20** illustre le fonctionnement de la carte à puce de la **figure 19** lorsque celle-ci est centrée par rapport à l'antenne du lecteur NFC, autrement dit lorsque la surface de la carte est exposée à un champ magnétique uniforme FL1 généré pat le lecteur.

Sous l'effet du champ magnétique FL1, des courants de Foucault - notés généralement I1-sont générés sur le revêtement 70 de la couche métallique 8. Ces courants de Foucault I1 circulent sous forme de boucles fermées de courant en surface de la couche métallique 8. Ces courants de Foucault se forment sur le revêtement 70 de la couche métallique 8 en boucles fermées dans une direction telle qu'ils créent un champ magnétique opposé au champ magnétique incident.

Dans l'exemple de la figure 20, les courants de Foucault circulent dans le sens des aiguilles d'une montre.

En supposant que toute la surface de la carte est exposée à un champ magnétique uniforme et comme dans le cas illustré à la figure 20, la boucle dominante B1 des courants de Foucault suit le contour périphérique de la couche métallique 8 recouvert de revêtement 70. A titre simplement illustratif, deux autres boucles secondaires B2 et B3 sont représentées.

De façon connue de l'homme du métier, les courants de Foucault, circulant dans le sens des aiguilles d'une montre, induisent un courant image I2a qui circule dans la première partie d'antenne ANT2 dans le sens inverse des aiguilles d'une montre.

Comme représenté en **figure 20,** on note I1a des courants de Foucault - dits premiers courants de Foucault - correspondant à des boucles dominantes circulant en surface du revêtement 70 de la couche métallique 8 au voisinage du contour périphérique de ladite couche métalliques 8. On note I1b des courants de Foucault - dits deuxièmes courants de Foucault - correspondant à des boucles secondaires circulant en surface du revêtement 70 de la couche métallique 8 au voisinage du contour périphérique de la zone d'évidement 14.

Puisque les courants de Foucault circulent en boucles fermées, les courants de Foucault I1b sont en réalité la continuité des courants de Foucault I1a au voisinage du contour périphérique de la zone d'évidement 14. Comme cela apparaît de la **figure 20,** les deuxièmes courants de Foucault I1b circulent, au voisinage de la deuxième partie d'antenne ANT2b, dans un sens de rotation (ou sens de circulation) opposé à celui des premiers courants de Foucault I1a circulant au voisinage du contour périphérique de la couche métallique 8. A titre d'exemple, on considère dans cet exemple que les premiers et deuxièmes courants de Foucault I1a, I1b circulent selon respectivement les sens horaire et antihoraire, une configuration inverse étant toutefois possible selon l'orientation du champ magnétique FL1 considéré. La circulation en sens opposé des courants de Foucault I1a et I1b résulte en particulier de la continuité des courants de Foucault mentionnée ci-avant, ainsi que de la présence de la zone d'évidement 14 qui est reliée dans cet exemple par la fente de raccordement F1 au contour périphérique 8a de la couche métallique 8.

Par conséquent, le courant I2 circulant dans la deuxième antenne RF ANT2 est un courant induit résultant de deux composantes, à savoir : un courant image I2a induit par les premiers courants de Foucault I1 circulant en surface de la couche métallique 8 au voisinage de la première partie d'antenne ANT2a ; et un courant I2b qui est induit directement dans la troisième partie d'antenne ANT2c par le champ magnétique incident FL1 au travers de la zone d'évidement 14 (I2 = I2a + I2b). La structure même de la carte à puce CD2 est conçue pour conduire à cette double contribution des courants induits I2a et I2b pour collecter dans la deuxième antenne RF un courant induit global I2 le plus important possible.

Plus précisément, la première partie d'antenne ANT2a s'étendant en regard du revêtement 70 de la couche métallique 8 collecte un courant image I2a induit par les premiers courants de Foucault I1a circulant en surface de la couche métallique 8 sous l'effet du champ magnétique FL1 lorsque la carte à puce CD2 est centrée avec l'antenne du lecteur NFC.

Ces premiers courants de Foucault I1a correspondent à des boucles dominantes circulant en surface du revêtement 70 de la couche métallique 8 au voisinage des spires de la première partie d'antenne ANT2a. Comme déjà indiqué, la première partie d'antenne ANT2a peut s'étendre de préférence en regard d'une zone (ou bande) périphérique de la couche métallique 8 recouverte du revêtement 70 pour collecter un maximum d'énergie généré par les boucles dominantes des courants de Foucault. Les premiers courants de Foucault I1a circulant dans le voisinage de la première partie d'antenne ANT1a (dans cet exemple en périphérie de la couche métallique 8) produisent un effet qui s'oppose au champ magnétique incident FL1. Le courant induit I2a collecté dans les spires de la première partie d'antenne ANT2a est lui-même un effet de réaction aux premiers courants de Foucault I1a.

Ainsi, le courant image I2a induit par les premiers courants de Foucault I1a est acheminé par conduction électrique jusqu'à la troisième partie d'antenne ANT2c, du fait de la continuité électrique entre les première, deuxième et troisième parties d'antenne ANT2a, ANT2b, ANT2c qui sont connectées ensemble.

Le courant image I2a circule ainsi dans les spires de la troisième partie d'antenne ANT2c positionnée en regard de la zone d'évidement 14.

Comme illustré en **figure 20**, le courant image I2a circule selon le même sens de rotation (ou même sens de circulation) dans les spires des première, deuxième et troisième parties d'antenne ANT2a, ANT2b et ANT2c, à savoir selon le sens antihoraire dans cet exemple. Cependant, du fait de la présence dans la couche métallique 8 de la zone d'évidement 14 connectée via la fente de raccordement F1 au bord périphérique 8a, les deuxièmes courants de Foucault I1b (boucles secondaires) circulent au voisinage de la zone d'évidement 14, en surface de la couche métallique 8 recouverte de revêtement 70, selon un sens de rotation (ou sens de circulation) opposé à celui des premiers courants de Foucault I2a circulant en périphérie de la couche métallique 8. A titre d'exemple, les deuxièmes courants de Foucault I1b circulent ici dans le sens antihoraire tandis que les premiers courants de Foucault I1a circulent suivant le sens horaire. Aussi, les deuxièmes courants de Foucault I1b circulant en périphérie de la zone d'évidement 14 ne s'opposent pas au champ magnétique traversant la fente et contribuent à amplifier le courant image I1a circulant dans les spires de la troisième partie d'antenne ANT2c.

Par ailleurs, l'effet de la deuxième fente F2 est de pousser la boucle dominante de courant de Foucault vers la deuxième partie ANT2b de la deuxième antenne ANT2, ce qui augmente le couplage d'énergie entre les courants de Foucault du revêtement 70 de la couche métallique 8 et la deuxième partie d'antenne ANT2b au voisinage de la deuxième fente F2.

Comme déjà indiqué, la troisième partie d'antenne ANT2c collecte en outre dans ses spires un courant I2b qui est induit directement par le champ magnétique incident FL1 capté au niveau de la zone d'évidement 14 par la troisième partie d'antenne ANT2c. Dans cet exemple, le champ magnétique FL1 est dirigé depuis la face supérieure de la carte à puce CD2 vers sa face inférieure. Aussi, la composante de courant I2b induite dans la deuxième partie d'antenne ANT2b circule également dans le sens antihoraire et s'ajoute donc au courant image I2a. Puisque les deux composantes de courant I2a et I2b circulent dans la même direction (composantes en phase) dans la deuxième antenne ANT2, elles s'ajoutent pour contribuer ensemble à la génération du courant induit global I2 circulant dans la deuxième antenne ANT2.

Le courant global I2 circulant dans la troisième partie d'antenne ANT2c induit à son tour un champ magnétique causant un couplage magnétique CL1 entre la première antenne RF ANT1 et la troisième partie d'antenne RF ANT2c, et donc a fortiori entre la première antenne RF ANT1 et la deuxième antenne RF ANT2. L'action combinée du courant image I2a acheminé depuis la première partie d'antenne ANT2a d'une part, et du courant I2b induit par le champ magnétique FL1 au niveau de la zone d'évidement 14 dans la troisième partie d'antenne ANT2c d'autre part, permet de maximiser la quantité d'énergie collectée dans la deuxième antenne RF ANT2 à partir du champ magnétique FL1, et donc de garantir un couplage magnétique CL1 performant entre les deux antennes RF ANT1, ANT2, ce qui permet de délivrer un maximum d'énergie à la puce RF 4 reliée à la première antenne RF ANT1.

La troisième partie d'antenne ANT2c contribue ainsi à amplifier la récupération d'énergie car elle comprend également une composante de courant électrique directement induite par le champ magnétique incident du lecteur NFC. Le fait que le courant circule dans le même sens dans les trois parties de l'antenne ANT2 augmente le transfert d'énergie (récoltée à la fois par les courants de Foucault sur la surface de la couche métallique 8 combinée à celle récoltée directement induite par le flux magnétique incident à travers la zone de la cavité 14) par couplage à la première antenne ANT1 et donc à la puce RF 4.

De retour à la figure 17A par exemple, lorsque la carte CD2 est décentrée par rapport au lecteur NFC, la boucle dominante B1 circule dans la deuxième région R2 dans le sens horaire dans une boucle fermée le long des bords 8b, 8c, 8d de la couche métallique 8, cette boucle traversant la couche métallique du bord 8d vers le bord 8b selon un chemin qui maximise la surface de cette boucle en vue directe avec le champ magnétique d'intensité maximum.

Comme expliqué en référence à la figure 18, la deuxième partie d'antenne ANT2b est agencée de sorte qu'au moins une de ses spires chevauche la fente F2 dans la deuxième région F2, préférentiellement dans une zone privilégiée ZC d'exploitabilité des courants de Foucault ZC recouverte du revêtement 70.

L'antenne ANT2b est ainsi en mesure de capter un courant image induit par un courant circulant dans la boucle dominante B1 du courant de Foucault induit par le champ magnétique lorsque la carte est décentrée, la boucle dominante B1 étant déviée par la fente F2, en vis-à-vis d'au moins une spire de la deuxième partie ANT2b (et éventuellement en vis-à-vis ou à proximité d'au moins une spire de la première partie d'antenne ANT2a).

En fonctionnement, sous l'effet du champ magnétique FL1 auquel est soumise la carte à puce CD2, la puce RF 4 est ainsi capable d'utiliser la deuxième antenne RF ANT2 couplée avec la première antenne RF ANT1 pour communiquer avec le lecteur NFC externe (en particulier pour échanger des signaux RF en transmission et/ou réception avec le lecteur NFC) quelle que soit la position de la carte par rapport au lecteur NFC dans conditions opérationnelles déterminées.

Lorsqu'un utilisateur présente la carte à puce CD2 au voisinage du lecteur NFC, une communication sans contact peut ainsi être établie entre le lecteur NFC et la carte à puce CD2, et ce quelles que soient la position et l'orientation de cette dernière vis-à-vis du lecteur NFC, le courant induit par les boucles dominantes des courants de Foucault étant collectés soit par la première partie d'antenne ANT2a, soit par la deuxième partie d'antenne ANT2b selon que la carte est centrée ou décalée par rapport au lecteur, dans les limites des conditions opérationnelles de la carte.

Comme déjà indiqué, divers arrangements de la carte à puce CD2 peuvent être envisagés, notamment en ce qui concerne la configuration de forme, dimensions, position, etc. de la zone d'évidement 14 et des fentes F1 et F2.

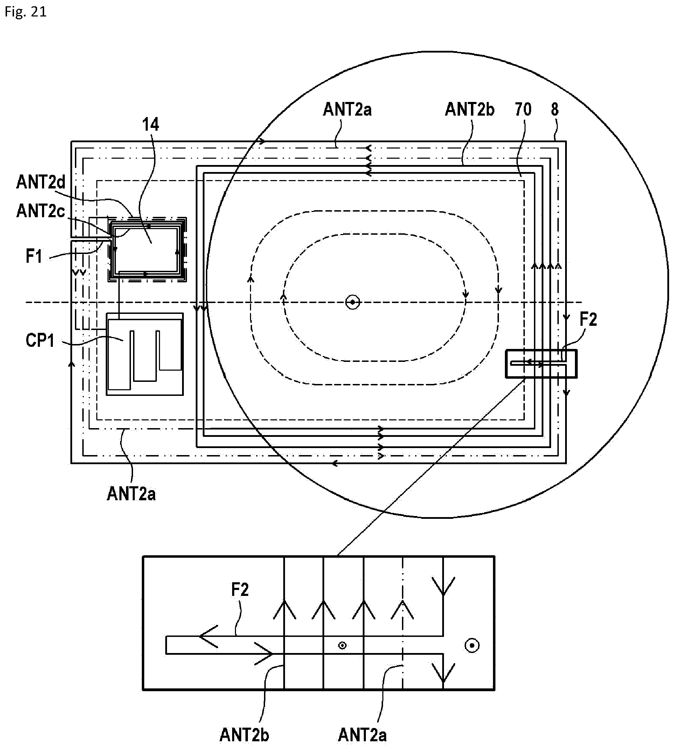

La **figure 21** illustre une autre carte à puce conforme à l'invention. Dans ce mode de réalisation, la deuxième fente F2 débouche sur un bord opposé au bord 8a dans lequel débouche la première fente F1.

Dans ce mode de réalisation de l'invention, la deuxième antenne ANT2 comporte une quatrième partie ANT2d autour de la zone d'évidement 14 et reliant les spires de la deuxième partie ANT2b à celle de la troisième partie ANT2c de la deuxième antenne ANT2. La quatrième partie d'antenne ANT2d est en superposition directe avec le conducteur du revêtement 70 de la couche métallique 8 et est également isolée électriquement de cette couche métallique comme les premières et deuxièmes parties d'antenne ANT2a, ANT2b.

Ces quatre parties d'antenne sont agencées de sorte à ce que le courant circule dans le même sens dans ces quatre parties.

Comme détaillé précédemment, le cercle $CH_R$ représente le contour délimitant la région/zone d'intensité maximale du champ magnétique du lecteur NFC, dans le plan de la carte, où le champ peut être considéré comme approximativement uniforme.

La figure 21 illustre une situation dans laquelle la carte NFC est placée de manière décalée par rapport au centre du cercle $CH_R$, de sorte que la zone d'évidement 14, les troisième et quatrième parties d'antenne ANT2c et ANT2d sont en dehors de cette région de champ magnétique maximal.

La fente F2 débouche sur un bord de la carte et se termine par une partie fermée dans une la deuxième région R2 de la couche métallique recouverte du revêtement 70.

Cette fente F2 est ainsi agencée pour dévier les boucles dominantes du courant de Foucault vers la zone ZC d'exploitation des courants de Foucaud en vis-à-vis de laquelle s'étend au moins une spire de la deuxième antenne ANT2b.

Dans le mode de réalisation décrit ici, la profondeur de la fente F2 selon la dimension longitudinale de la carte à puce est choisie pour être au moins égale ou voisine de la distance des spires adjacentes de l'antenne ANT2b par rapport au bord de la couche métallique sur lequel débouche la fente F2.

Par ailleurs, et comme représenté dans la zone de détails de la figure 21, la fente F2 permet également au champ magnétique incident du lecteur de traverser la couche métallique 8 tout en étant en phase avec le courant électrique induit dans les spires de la deuxième antenne ANT2b. Comme expliqué précédemment, le courant dans la deuxième antenne ANT2b a composantes :

(i) une première composante correspondant au courant image capté par la deuxième antenne ANT2b ; et

(ii) une deuxième composante créée par induction magnétique à travers l'ouverture de la fente F2 dans la partie des fils d'antenne de la deuxième antenne ANT2b qui chevauchent la fente F2.

La **figure 22** représente schématiquement un procédé de fabrication de l'une des cartes à puce CD2 décrites ci-avant, selon au moins un mode de réalisation particulier. Au cours d'une étape S2 de fourniture, on forme (ou fournit) un corps de carte 6 comprenant une couche métallique 8 comme précédemment décrite. En particulier, ce corps de carte 6 est formé au moins en partie par une couche métallique 8, cette couche métallique 8 comprenant une zone d'évidement 14.

Dans le mode de réalisation décrit ici, la couche métallique 70 est entièrement recouverte de revêtement 70.

On considère que la couche métallique 8 est constituée par une première région R1 et une deuxième région R2 entièrement délimitées par une droite LIM parallèle à un petit côté de la carte CD2, la première région R1 contenant entièrement la zone d'évidement 14, sa surface étant plus petite que celle de la deuxième région R2.

La couche métallique comporte une première fente F1 qui connecte la zone d'évidement à un bord périphérique 8a de la couche métallique et une deuxième fente F2 débouchant soit sur un bord périphérique de la couche métallique soit dans la zone d'évidement 14, la deuxième fente F2 se terminant par une partie fermée la deuxième région R2.

Au cours d'une étape S4 de formation, une première antenne RF ANT1 est formée (ou assemblée) sur ou dans le corps de carte 6 dans ou en regard de la zone d'évidement 14 de la couche métallique 8, comme déjà décrit.

Au cours d'une étape S6 d'assemblage, une puce RF 4 est assemblée avec le corps de carte 6 de sorte que la puce RF 4 est connectée électriquement à la première antenne RF, comme précédemment décrit.

Au cours d'une étape S8 de formation, une deuxième antenne RF ANT2 est formée (ou assemblée) sur ou dans le corps de carte 6 de sorte que la deuxième antenne RF ANT2 est isolée électriquement de la couche métallique 8 et de la première antenne RF ANT1, comme déjà décrit. En particulier, l'étape S8 de formation est réalisée de sorte que la deuxième antenne RF est destinée à permettre un couplage avec la première antenne, la deuxième antenne comportant au moins une spire située en regard de la première fente F1 et au moins une spire située en regard de la deuxième fente F2.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

**Revendications**

**1.** Carte à puce (CD1, CD2) comprenant :

- un corps de carte (6) formé au moins en partie par une couche métallique (8) comprenant une zone d'évidement (14), - une puce RF ;
- une première antenne RF disposée dans ou en regard de la zone d'évidement et connectée électriquement à la puce RF ;
- au moins une partie d'antenne RF (ANT2) isolée électriquement de la couche métallique et de la première antenne RF et ladite au moins une partie d'antenne (ANT2) étant une deuxième antenne RF (ANT2) comprenant:

(i) une première partie d'antenne (AT2a) s'étendant en regard d'une partie de la couche métallique; et
(ii) une deuxième partie d'antenne (AT2b), connectée électriquement à la première partie d'antenne (AT2a), et s'étendant en regard de la zone d'évidement pour permettre un couplage magnétique avec la première antenne,

**caractérisé en ce que** la couche métallique (8) est au moins partiellement recouverte par un revêtement (70) plus conducteur que la couche métallique et **en ce que** ladite première partie d'antenne (AT2a) s'étend en regard d'une partie de la couche métallique recouverte par ledit revêtement (70) pour collecter ledit courant image (I2a) induit par des premiers courants de Foucault (I1a) circulant au moins sur le revêtement (70) de la couche métallique et permettre un couplage de la deuxième partie d'antenne (AT2b) avec la première antenne RF.

**2.** Carte à puce selon la revendication 1 **caractérisée en ce que** la couche métallique (8) est entièrement recouverte par ledit revêtement (70).

**3.** Carte à puce selon la revendication 1 ou 2, **caractérisée en ce que** l'épaisseur du revêtement (70) est supérieure à l'épaisseur de peau dudit revêtement (70).

**4.** Carte à puce selon l'une quelconque des revendications 1 à 3, **caractérisée** en ce **caractérisée en ce que** la conductivité dudit revêtement (70) est supérieure à 3,5x10' S/m.

**5.** Carte à puce selon l'une quelconque des revendications 1 à 4, **caractérisée en ce que** ledit revêtement (70) est en cuivre, en argent ou en or.

**6.** Carte à puce (CD1) selon l'une quelconque des revendications 1 à 4 dans laquelle ladite zone d'évidement (14) débouche sur un bord périphérique (8a) de la couche métallique..

**7.** Carte à puce (CD2) selon l'une quelconque des revendications 1 à 4, dans lequel le corps de carte est rectangulaire, ladite couche métallique étant constituée par une première région (R1) et une deuxième région (R2) délimitées par une droite (LIM) parallèle à un petit côté de la carte, la première région contenant la zone d'évidement (14),

- une première fente (F1) connectant la zone d'évidement à un bord périphérique de la première région (R1);
- une deuxième fente (F2) débouchant soit sur un bord périphérique de la couche métallique (8) soit dans la zone d'évidement, la deuxième fente se terminant par une partie fermée dans la deuxième région; et
- ladite au moins une partie d'antenne (ANT2) étant une deuxième antenne RF (ANT2) comportant au moins une spire située en regard de la première fente (F1) et au moins spire située en regard de ladite deuxième fente (F2).

**8.** Procédé de fabrication d'une carte à puce (CD1, CD2) à partir d'un corps de carte (6) formé au moins en partie par une couche métallique (8) comprenant une zone d'évidement (14), le procédé comprenant :

- recouvrir au moins partiellement, préférentiellement entièrement la couche métallique (8) par un revêtement (70) plus conducteur que la couche métallique (8) ;

- formation sur ou dans le corps de carte d'une première antenne RF (ANT1) dans ou en regard de la zone d'évidement de la couche métallique ;

- assemblage d'une puce RF (4) avec le corps de carte de sorte que la puce RF (4) est connectée électriquement à la première antenne RF ; et

- formation sur ou dans le corps de carte d'au moins une partie d'antenne RF (ANT2) isolée électriquement de la couche métallique et de la première antenne RF et configurée pour collecter un courant image (I2a) induit par des premiers courants de Foucault (I1a) circulant au moins sur le revêtement de la couche métallique et permettre un couplage avec la première antenne.

9. Procédé de fabrication d'une carte à puce (CD1) selon la revendication 8 dans lequel ladite zone d'évidement (14) débouche sur un bord périphérique (8a) de la couche métallique, ladite au moins une partie d'antenne (ANT2) étant une deuxième antenne RF comprenant :

   (i) une première partie d'antenne (AT2a) s'étendant en regard de la couche métallique pour collecter un courant image (I2a) induit par des premiers courants de Foucault (I1a) circulant au moins sur le revêtement de la couche métallique ; et

   (ii) une deuxième partie d'antenne (AT2b), connectée électriquement à la première partie d'antenne (AT2a), et s'étendant en regard de la zone d'évidement pour permettre un couplage (FL1) magnétique entre la première antenne RF et la deuxième antenne RF. (correspond à la revendication 12 du premier dossier).

10. Procédé de fabrication d'une carte à puce (CD2) selon la revendication 8 dans lequel le corps de la carte est de forme générale rectangulaire, ladite couche métallique (8) étant constituée par une première région (R1) et une deuxième région (R2) entièrement délimitées par une droite (LIM) parallèle à un petit côté de la carte (CD2), la première région (R1) contenant entièrement la zone d'évidement (14) et sa surface étant plus petite que celle de la deuxième région (R2), une première fente (F1) de la couche métallique connectant la zone d'évidement (14) à un bord périphérique (8a) de la première région (R1) et une deuxième fente (F2) de la couche métallique débouchant soit sur un bord périphérique de la couche métallique (8) soit dans la zone d'évidement (14), la deuxième fente (F2) se terminant par une partie fermée dans la deuxième région (R2),-ladite au moins une partie d'antenne étant une deuxième antenne comportant au moins une spire située en regard de la première fente et au moins une spire située en regard de la deuxième fente.

Fig. 1

Fig. 2

Fig. 3

Fig. 4A

Fig. 4B

Fig. 5

Fig. 6

Fig. 7

Fig. 8

Fig. 9

S2 — FOURNITURE D'UN CORPS DE CARTE AVEC UNE ZONE D'ÉVIDEMENT 14 ET UNE OUVERTURE DE RACCORDEMENT 28

S4 — FORMATION D'UNE PREMIÈRE ANTENNE RF AT1

S6 — ASSEMBLAGE D'UNE PUCE RF 4

S8 — FORMATION D'UNE DEUXIÈME ANTENNE RF AT2

Fig. 10

Fig. 11

Fig. 12A

Fig. 12B

Fig. 13

Fig. 14

Fig. 15

Fig. 16

Fig. 17A

Fig. 17B

Fig. 17C

Fig. 17D

Fig. 18

Fig. 19

Fig. 20

Fig. 21

Fig. 22

| | |
|---|---|
| S2 | FOURNITURE D'UN CORPS DE CARTE AVEC UNE ZONE D'ÉVIDEMENT 14, UNE FENTE F1 ET UNE FENTE F2 |

| | |
|---|---|
| S4 | FORMATION D'UNE PREMIÈRE ANTENNE RF ANT1 |

| | |
|---|---|
| S6 | ASSEMBLAGE D'UNE PUCE RF 4 |

| | |
|---|---|
| S8 | FORMATION D'UNE DEUXIÈME ANTENNE RF ANT2 |

Fig. 23

$nr - (r, \varphi)$
0 - (0,0)
1 - (1,5,0)
2 - (2,5,0)
3 - (1.5,$\pi$/2)
4 - (2.5,$\pi$/2)
5 - (1.5,$\pi$)
6 - (2.5,$\pi$)
7 - (1.5,3$\pi$/2)
8 - (2.5,3$\pi$/2)

| Sujet | Paramètre | Valeur | Unités |
|---|---|---|---|
| Volume opérationnel | $D_1$ | 3 | cm |
| | $D_2$ | 5 | cm |
| | $S_1$ | 1 | cm |
| | $S_2$ | 2 | cm |

Europäisches Patentamt
European Patent Office
Office européen des brevets

# RAPPORT DE RECHERCHE EUROPEENNE

Numéro de la demande

EP 24 16 9370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/049431 A1 (FINN DAVID [DE]) 18 février 2021 (2021-02-18) * abrégé * * alinéas [0166] - [0174], [0316] - [0370] * * figures 10-13 * ----- | 1-10 | INV. G06K19/02 G06K19/077 |
| A | WO 2023/002331 A1 (METALAND LLC [US]) 26 janvier 2023 (2023-01-26) * abrégé * * alinéas [0275] - [0435] * * figure 3c * ----- | 1-10 | |
| A | US 2020/257953 A1 (LOTYA MUSTAFA [IE] ET AL) 13 août 2020 (2020-08-13) * abrégé * * alinéas [0073] - [0116], [0287] - [0403] * * figures 4h,16d * ----- | 1-10 | |

**DOMAINES TECHNIQUES RECHERCHES (IPC)**

G06K
H01Q

Le présent rapport a été établi pour toutes les revendications

| Lieu de la recherche | Date d'achèvement de la recherche | Examinateur |
|---|---|---|
| Munich | 20 septembre 2024 | Castagnola, Bruno |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
   .................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 16 9370

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2024

| Document brevet cité au rapport de recherche | Date de publication | Membre(s) de la famille de brevet(s) | Date de publication |
|---|---|---|---|
| US 2021049431 A1 | 18-02-2021 | US 2021049431 A1<br>US 2022237423 A1 | 18-02-2021<br>28-07-2022 |
| WO 2023002331 A1 | 26-01-2023 | AUCUN | |
| US 2020257953 A1 | 13-08-2020 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 2021049431 A
- WO 2023002331 A
- FR 2113850
- FR 2214390

**Littérature non-brevet citée dans la description**

- *EMV Contactless Spécifications for Payment Systems, Book D: EMV Contactless C ommunication Protocol Spécification,* 06 Mars 2016